(19) Europäisches Patentamt
European Patent Office
Office européen des brevets

(11) EP 1 733 526 B1

(12) **EUROPEAN PATENT SPECIFICATION**

(45) Date of publication and mention of the grant of the patent:
**05.03.2008 Bulletin 2008/10**

(21) Application number: **04716573.3**

(22) Date of filing: **03.03.2004**

(51) Int Cl.:
***H04L 27/34*** *(2006.01)* ***H04L 1/00*** *(2006.01)*

(86) International application number:
**PCT/EP2004/002141**

(87) International publication number:
**WO 2005/069574 (28.07.2005 Gazette 2005/30)**

(54) **APPARATUS AND METHOD FOR PROVIDING A SET OF CHANNEL INPUT SYMBOLS AND APPARATUS AND METHOD FOR PROVIDING A PLURALITY OF INFORMATION BITS**

GERÄT UND VERFAHREN ZUM GENERIEREN EINER MENGE VON KANALEINGANGSSYMBOLEN UND GERÄT UND VERFAHREN ZUM GENERIEREN VON INFORMATIONSBITS

APPAREIL ET PROCEDE PERMETTANT DE FOURNIR UN ENSEMBLE DE SYMBOLES D'ENTREE DE CANAL ET APPAREIL ET PROCEDE PERMETTANT DE FOURNIR UNE PLURALITE DE BITS D'INFORMATIONS

(84) Designated Contracting States:
**DE GB**

(30) Priority: **13.01.2004 EP 04000539**

(43) Date of publication of application:
**20.12.2006 Bulletin 2006/51**

(60) Divisional application:
**07020840.0 / 1 876 745**

(73) Proprietor: **NTT DoCoMo, Inc.**
**Tokyo (JP)**

(72) Inventors:
- **SCHRECKENBACH, Frank**
**80799 Munich (DE)**
- **HAGENAUER, Joachim**
**82229 Seefeld (DE)**
- **BAUCH, Gerhard**
**80799 Munich (DE)**

(74) Representative: **Zinkler, Franz et al**
**Schoppe, Zimmermann, Stöckeler & Zinkler**
**Postfach 246**
**82043 Pullach bei München (DE)**

(56) References cited:
- **ORMECI P; XUETING LIU; GOECKEL D L; WESEL R D: "Adaptive bit-interleaved coded modulation" IEEE TRANSACTIONS ON COMMUNICATIONS, September 2001 (2001-09), pages 1572-1581, XP002301155**
- **DIVSALAR D ET AL: "ITERATIVE TURBO DECODER ANALYSIS BASED ON DENSITY EVOLUTION" IEEE JOURNAL ON SELECTED AREAS IN COMMUNICATIONS, IEEE INC. NEW YORK, US, vol. 19, no. 5, May 2001 (2001-05), pages 891-907, XP001101009 ISSN: 0733-8716**
- **TUECHLER M ET AL: "EXIT CHARTS OF IRREGULAR CODES" PROCEEDINGS OF THE ANNUAL PRINCETON CONFERENCE ON INFORMATION SCIENCES AND SYSTEMS, XX, XX, 20 March 2002 (2002-03-20), pages 748-753, XP009021981 cited in the application**
- **TUCHLER M ED - INSTITUTE OF ELECTRICAL AND ELECTRONICS ENGINEERS: "Design of serially concatenated systems for long or short block lengths" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 May 2003 (2003-05-11), pages 2948-2952, XP010642985 ISBN: 0-7803-7802-4 cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 733 526 B1

- SCHRECKENBACH F ET AL: "Optimized symbol mappings for bit-interleaved coded modulation with iterative decoding" GLOBECOM 2003, vol. 6, 1 December 2003 (2003-12-01), pages 3316-3320, XP010678408

## Description

The present invention is in the field of telecommunications and, in particular, in the field of information transmission through communication channels.

In order to transmit information through a communication channel, information bits have to be encoded in order to protect the information from channel influences. After encoding, encoded bits are usually interleaved and the interleaved bits are mapped or modulated onto complex signal space constellation points belonging to, for example, QAM (Quadrature Amplitude Modulation) constellation, in order to provide channel input symbols transmittable through the communication channel. However, a capacity of the communication channel measured in a number of information bits per channel input symbol is limited by the available channel bandwidth, by channel noise and by the maximum allowable transmit power. Hence, an information throughput is limited.

In order to optimize the throughput, several solutions have been proposed by several standardization bodies. For example, Adaptive Modulation and Coding (AMC) has been standardized in the latest 2G (second generation) and 3G (third generation) releases. An enhanced data for GSM evolution (EDGE) extends the General Packet Radio Services (GPRS) system with the GSM framework by AMC in order to increase the data rate. To do so, nine modulation and coding schemes have been specified. The code rates can vary between approximately 1/3 and 1/1 through puncturing of a rate 1/3 code. The modulation is GMSK (Gaussian minimum shift keying) or 8-PSK (phase shift keying). In Fig. 21, different modulation and coding schemes (MCS) for EDGE are shown.

For 3G systems, HSDPA (High-Speed Downlink Packet Access) has been specified with AMC instead of fast power control and variable spreading factor to increase the data throughput. Depending on the user equipment (UE) capabilities, 30 modulation and coding schemes have been specified. The code rate can vary between approximately 1/6 and 1/1 for puncturing and repetition of the rate 1/3 code. The modulation can be switched between QPSK (Quaternary Phase Shift Keying) and 16-QAM. Concerning the trade-off throughput versus complexity versus error rate, EDGE uses a convolutional code with Gray mapping and HSDPA uses a turbo code with a fixed number of iterations with Gray mapping. However, no further adaptation is possible.

In order to optimize the throughput, so-called irregular codes, as described in M. Luby, M. Mitzenmacher, A. Shokrollahi, D. Spielman, V. Stemann, "Practical Loss-Resilient Codes" in Proc. 29th Annu. ACM Symp. Theory of Computing, 1997, pp 150-159 or B. Frey and D. MacKay, "Irregular turbo-like codes" and 2nd Intern. Symposium on Turbo codes, Brest, France, September 2000, pp. 67-72, and in M. Tüchler and J. Hagenauer, "Exit charts of irregular codes" in Conference on Information Sciences and Systems (CISS), Princeton University, March 2002, for serial and parallel concatenated convolutional codes may be applied. In T. Richardson and R. Urbanke, "Design of low desity (sic) parity-check codes," IEEE Transactions on Information Theory, vol. 47, pp. 619-637, February 2001, Low Density Parity Check (LDPC) codes are described, which allow an optimization of the iterative decoding behavior of concatenated codes. An irregular code in this context consists of subcodes with different code rates used to encode fractions of the data bits within one data block. However the AMC concept suffers from the disadvantage, that a more flexible adaptation to the channel quality is only possible, if, beside the code rate, several options for the modulation scheme are available. That means, that for a certain code rate, a certain, matched, modulation scheme would have to be applied. In this case, a transmitter's complexity would increase, since a plurality of modulation schemes, for example QPSK, 8-PSK, 16-QAM, 32-QAM etc. would have to be supported. A further disadvantage of the prior art approaches results from the fact, that only a "hard" switch between different modulation schemes can be performed. Therefore, a fine adaptation of the throughput is terms of adapting a number of information bits per channel input symbol cannot be performed. For example, if a QPSK modulation scheme is used to modulate a set comprising coded bit resulting from encoding information bits using an encoding scheme having a certain coding rate, then only two coded bits can be mapped onto a complex signal space constellation point representing a channel input symbol. This results in an inefficient exploitation of the available bandwidth since a fine adaptation to the available channel capacity is not possible.

In order to more efficiently exploit the channel capacity, a different encoding scheme having a different code rate or a puncturing scheme can be applied. This concept allows a course adaptation, since not every fraction of information bits per channel input symbol, for example 0.658 can be obtained. The further limitation results from the fact, that allowable, and therefore possible, puncturing schemes and code rates are predefined in communication standards. Therefore, also the course adaptation possibilities associated with the prior art approaches are limited. The prior approaches suffer furthermore from the fact, that often a full channel information as a channel state information, for example the current channel impulse response is necessary in order to perform the adaptation.

Pinar Örmeci et al.: "Adapted Bit-Interleaved Coded Modulation", IEEE Transactions on Communications, September 2001, pages 1572-1581 discloses an adaptive BICM transmitter having a convolutional encoder, a bit interleaver, a modulator and an element for choosing a signal set to be used for mapping the output of the bit interleaver onto signals.

Dariush Divsalar et al.:"Iterative Turbo Decoder Analysis Based on Density Evolution, IEEE Journal on Selected Areas in Communications, vol. 19, No. 5, May 2005, pages 891-907 analyses concatenated mixture codes.

M. Tüchler and J. Hagenauer, "EXIT charts of irregular codes", Proceedings of the Annual Princeton Conference on Information Sciences and Systems, 20 March 2002, pages 748-753 using an irregular code using different subcodes of different rates.

It is the object of the present invention to provide an efficient concept for a fine adaptation of the information throughput.

This object is achieved by an apparatus for providing a set of channel input symbols in accordance with claim 1 or by an apparatus for providing a plurality of information bits from a set of channel output symbols in accordance with claim 10 or by a method for providing a set of channel input symbols in accordance with claim 20 or by a method for providing a plurality of information bits in accordance with claim 21 or by a computer program in accordance with claim 22.

The present invention is based on the finding, that a fine adaptation of the information throughput can be performed, when a transmission of any number of coded bits per set of channel input symbols, i.e. a transmission of any number of information bits per set of channel input symbols comprising a plurality of channel input symbols can be achieved.

In particular, it has been found, that the information throughput can be fine adapted when a set of channel input symbols is obtained from applying at least two different modulation schemes or different mapping schemes to subsequent sub-sets of coded bits, wherein the subsequent sub-sets of coded bits are obtained from assigning subsequent groups of successive coded bits of a set of coded bits to the subsequent sub-sets of coded bits. In accordance with the present invention, the different characteristics of different modulation or mapping schemes are combined within one set of coded bits (one block of coded bits), so that the set of channel input symbols has an average number of bits per channel input symbol which can be any desired average number of information bits per channel input symbol in the set of channel input symbols. The average number of bits per channel input symbol can be obtained by, for example, adding all information bits assigned to all channel input symbols comprised in the set of channel input symbols and dividing a result of the addition by a number of channel input symbols in the set of channel input symbols.

In accordance with the present invention, the characteristics of all possible modulation schemes can be generated out of the combination of a minimum of two modulation schemes. Thus, a transmitter and a receiver must support only the two modulation schemes.

If a high number of bits are used to characterize the ratios of the underlying modulation schemes, an arbitrary accurate adaptation to the communication channel can be achieved. Instead of a "hard" switch between different modulation schemes, a "soft" adaptation scheme is provided. Therefore, any adaptation of the information throughput can be achieved without significantly increasing a complexity of the receiver or transmitter architectures. Moreover, since the characteristics of different modulation schemes are exploited in order to achieve the desired average number of bits per channel input symbol in the set of channel input symbols, the inventive concept can be implemented within any standard conform transmission platform, since, in accordance with the present invention, a merging of any modulation or mapping schemes is possible in order to obtain the average number of information bits. Furthermore it is a further advantage of the present invention, that the fine adaptation of the information throughput can be adjusted to a code rate of a coder being applied for encoding information bits to provided coded bits without any necessity of altering the coding scheme by for example puncturing etc. Therefore, the inventive concepts can be applied for a fine adaptation of the information throughput in combination with any encoding scheme.

Moreover, since any average number of information bits per channel input symbol can be achieved, the inventive fine adaptation approach allows a more efficient bandwidth exploitation since the average number of information bits per channel input symbol can be increased in fine steps so that a better approximation to the achievable number of information bits per channel input symbol, which is limited by the channel capacity, can be achieved.

Similar advantages can be achieved, when the inventive concept is applied to irregular decoding and/or mapping. Out of low number of mappings or precoder, a large set of possibilities is given through combination of the underlying systems. Thus, the complexity and error rate requirements can easily be realized in an accurate way. The convergence of the inventive system can further be optimized using irregular schemes due to a high number of combination possibilities. Furthermore, it is easier to switch between mappings or precoder than to switch the memory of the outer channel code in order to select the error rate performance for a given complexity.

Preferred embodiments of the present invention are described in detail with respect to the following figures, in which:

Fig. 1 shows a block diagram of the inventive apparatus for providing a set of channel input symbols in accordance with a first embodiment of the present invention;

Fig. 2 shows a block diagram of the inventive apparatus for providing a set of channel input symbols in accordance with a further embodiment of the present invention;

Fig. 3 shows a block diagram of the inventive apparatus for providing a plurality of information bits in accordance with a first embodiment of the present invention;

Fig. 4 shows the inventive apparatus for providing a plurality of information bits in accordance with a further embodiment of the present invention;

Fig. 5 shows the inventive system model in accordance with a further embodiment of the present invention;

Fig. 6 shows the inventive system model in accordance with a further embodiment of the present invention;

Fig. 7 shows different transfer functions for different channel codes in accordance with the present invention;

Fig. 8 shows transfer functions for parallel concatenated codes;

Fig. 9 shows different mappings with decision regions in accordance with the present invention;

Fig. 10 shows transfer functions of different mappings;

Fig. 11 shows a precoder architecture in accordance with the present invention;

Fig. 12 shows a precoder arrangement in accordance with the present invention;

Fig. 13 shows transfer functions;

Fig. 14 demonstrates a construction of irregular schemes in accordance with the present invention;

Fig. 15 shows transfer functions in accordance with the present invention;

Fig. 16 shows transfer functions in accordance with the present invention;

Fig. 17 shows transfer functions in accordance with the present invention;

Fig. 18 shows transfer functions in accordance with the present invention;

Fig. 19 shows transfer functions in accordance with the present invention;

Fig. 20 shows transfer functions in accordance with the present invention; and

Fig. 21 shows modulation encoding schemes for EDGE.

Fig. 1 shows a block diagram of the inventive apparatus for providing a set of channel input symbols in accordance with the first embodiment of the present invention.

The apparatus comprises a processing unit 101 having an input and an output which is coupled to means 103 for differently processing. The means 103 for differently processing has an output for providing a set of channel input symbols and a further input, to which means 105 for providing channel capacity information is coupled.

The processing unit 101 is operative for encoding a plurality of information bits to provide a set of processed values via the output. The set of processed values may be a block of coded bits resulting from encoding the information bits using for example a convolutional encoder having a coding rate of for example 0.5. Additionally, the processing unit may comprise an interleaver for interleaving the coded bits in order to provide a block of interleaved bits as the set of processed values. As is depicted in Fig. 1, the set of processed values comprises a number of successive sub-sets of processed values, wherein the number of successive sub-sets of processed values results in the set of processed values. For the sake of simplicity, Fig. 1 shows the case, where the set of processed values is divided into two subsequent sub-sets of processed values, namely a first sub-set 107 of processed values and a second sub-set 109 of processed values. It is to be emphasized at this point, that the set of processed values corresponds to one block of coded values provided by the encoder comprised by the processing unit 101. Therefore, the set of processed values is associated with the same coding rate of the encoder.

In order to achieve the fine adaptation of the information throughput, the means 103 for differently processing is operative for differently processing the number of successive sub-sets of processed values, to provide the set of channel input symbols having a desired average number of information bits per channel input symbol. To do so, the means 103 for differently processing is operative to apply different processing schemes to each sub-set of processed values, e.g., to the first sub-set 107 of processed values and to the second sub-set 109 of processed values. In order to achieve an optimum adaptation performance, the means 103 for differently processing uses channel capacity information provided by the means 105 for providing channel capacity information in order to apply the different processing schemes to each sub-set of processed values, so that the average number of information bits per channel input symbol in the set of channel input symbols is closer to an achievable number of information bits per channel input symbol, wherein the achievable number is limited by the channel capacity being described by the Shannon-theorem, than a number of information bits per channel input symbol without differently processing the number of successive sub-sets of processed values, e.g. when the same processing scheme is applied to all processed values in the set of processed values. Since the means 103 for differently processing is operative for applying different processing schemes to different successive sub-sets of processed values depending on the channel capacity information, an optimum adaptation or adjustment of the data rate to the current channel conditions can be achieved. This advantage is achieved on the basis of channel capacity information only, without the necessity of a full knowledge of the communication channel (e.g. channel coefficients).

For example, the means 105 for providing channel capacity information may be operative for providing a signal-to-noise ratio (SNR), information on a noise power in the communication channel, information on fading characteristics of the (wireless) communication channel etc.

In accordance with a further aspect of the present invention, the means 105 for providing channel capacity information may receive same from a remote communication receiver being operative for estimating the above-mentioned parameter and transmitting same back to the transmitter housing the inventive apparatus via for example an additional communication channel.

In order to differently process the successive sub-sets of processed values, the means 103 for differently processing may comprise means for differently mapping the successive sub-sets of processed values onto different signal space constellations in order to obtain the set of channel input symbols having the average number of information bits per channel input symbol. The means for differently mapping may be for example operative to map the first sub-set of processed values onto a plurality of complex signal space constellation points associated with a mapping scheme, e.g. 32-QAM, to obtain a first plurality of channel input symbols for the set of channel input symbols. Accordingly, the means for differently mapping is operative for mapping the second sub-set of processed values onto a further plurality of signal space constellation points using a further mapping scheme, for example QPSK, to obtain a second plurality of channel input symbols, wherein the first and the second plurality of the channel input symbols constitute the set of channel input symbols.

Differently modulating preferably consists of the use of different signal constellations (64QAM, 16QAM, 8-PSK, QPSK), to adapt the throughput. Differently mapping preferably consists of the use of different mapping schemes, i.e., bit leveling schemes (e.g. Gray, Partitioning) given a specific signal constellation. With differently mapping, it is possible to adjust the error rate and the complexity in terms of required number of decoding iterations at the receiver. The modulation to carrier (high) frequency is not considered here.

Generally speaking, the means for differently mapping is operative for differently (or individually) mapping the successive sub-sets of processed values onto different signal space constellations, which are defined by different mapping schemes, using a different mapping scheme for each sub-set of processed values to obtain the set of channel input symbols. For example, the means for differently mapping is operative to map m successive processed values of a sub-set of processed values, for example of the first sub-set of processed values, onto a $2^m$-ary signal space constellation. For example, the means for differently mapping uses Gray or Set Partitioning mapping with a QAM or a PSK signal constellation of different size just to name a few possibilities. It is, however, to be noted that the present invention is useful for arbitrary signal constellations and mappings. In this regard, Gray and Set Partitioning can be seen as a mapping possibility, while QAM and PSK can be seen as a signal constellation or modulation scheme.

Moreover, the means for differently mapping may be operative to perform, for a sub-set, a coded mapping combining coding associated with a coding scheme and mapping.

The means 103 for differently processing may comprise means for differently modulating the successive sub-sets of processed values to provide the set of channel input symbols.

The means 103 for differently processing may further comprise means for differently precoding the successive sub-sets of processed values to obtain successive processed sub-sets of values to be mapped to obtain the set of channel input symbols. For example, the means for differently precoding may be operative for precoding the successive sub-set of processed values using different precoding schemes having a code rate equal to 1 to provide successive precoded sub-sets of values as the successive sub-sets of processed values. In other words, the means for differently precoding (precoder) introduces an additional complexity which can be exploited at the receiver for obtaining better estimates of the channel information bits without introducing any additional redundancy. For example, the different precoding schemes are recursive for each sub-set of processed values, so that, at the receiver, an iterative de-precoding scheme, possibly in a combination with a further decoding scheme, can be applied.

The means for differently modulating (modulator) the successive sub-sets of processed values is, in accordance with the present invention, operative for modulating successive sub-sets of processed values onto different signal space constellations using a different modulation scheme or signal constellation for each sub-set of processed values to obtain the channel input symbols. For example, the means for differently modulating is operative to map m successive values of a sub-set of processed values, for example of the first sub-set of processed values, onto a $2^m$-ary signal space constellation to provide the set of channel input symbols. For example, the means for differently mapping uses Gray or Set Partitioning mapping with a QAM or a PSK signal constellation of different size just to name a few possibilities. Moreover, the inventive means for differently modulating may be operative to perform, for each sub-set, a coded modulation combining an encoding and a modulation.

In accordance with the present invention, the means 103 for differently processing may only comprise the means for differently mapping (mapper) or the means for differently modulating (modulator). Moreover, the means for differently processing may comprise a combination consisting of a concatenation of the means for differently mapping and the means for differently precoding or a concatenation consisting of the means for differently modulating and the means for differently precoding. In accordance with the present invention, the channel capacity information is provided to the means for differently processing, so that the means for differently mapping or the means for differently modulating and/or the means for differently precoding may receive the channel capacity information in order to perform the required different processing steps.

In accordance with the present invention, the processing unit 101 comprises an encoder having a code rate smaller than or equal to 1 for encoding the plurality of information bits provided via the input in order to provide coded bits as the set of processed values. Optionally, the processing unit may comprise an interleaver for interleaving the coded bits to provide interleaved values as the set of processed values. Moreover, the processing unit 101 may further comprise a mapper for mapping the coded bits (coded values) or the interleaved values onto a signal space constellation common for all values in order to provide signal space constellation points (values) as the processed values. In other words, the mapper is operative to apply the same mapping scheme, which can be a coded mapping scheme, to the set of coded bits or the interleaved values in order to provide the (complex valued) signal space constellation values as the processed values. For example the mapper comprised by the processing unit 101 is operative to map m successive interleaved values onto a $2^m$-ary signal space constellation points from, for example one of the previously-mentioned signal space constellations. In this case, the subsequent sub-sets of processed values comprise complex signal space constellation points (signal space representatives). In order to achieve the desired average number of information bits in set of channel input symbols, the means 103 for differently processing comprises the means for differently modulating, wherein the means for differently modulating is operative for differently modulating the sub-set of processed values by, for example, reorganizing the signal space constellation points or by applying different modulation schemes or signal constellations by, for example, differently modulating a carrier, in order to provide the set of channel input symbols.

Additionally, the processing unit 101 may further comprise a precoder for precoding the interleaved values or the coded values (coded bits) using a code having a code rate equal to 1 in order to provide the processed values. For example, the precoder is operative for applying one of the precoding schemes mentioned above and has a structure equal to the structure of the means for differently precoding with the exception that the same precoding scheme is applied to the complete set of coded or interleaved values.

In order to obtain the sub-set of processed values, the apparatus shown in Fig. 1 may further comprise a sequence controller for assigning successive groups of successive processed values to successive sub-sets of processed values. In other words, the sequence controller is operative for providing a timing information indicating a respective number of (current) successive processed values to be assigned to a respective sub-set of processed values. Optionally, the sequence controller may be operative for dividing the set of processed values into successive sub-sets of processed values. The operation of the inventive sequence controller will be explained later in detail.

Fig. 2 shows a block diagram of the inventive apparatus for providing a set of channel input symbols is in accordance with a further embodiment of the present invention.

The apparatus of Fig. 2 comprises an encoder 201 having an input for receiving information bits and an output for providing coded bits to an interleaver 203. The interleaver 203 has an output coupled to a means 205 for differently precoding. The means 205 for differently precoding has an output coupled to a means 207 for differently mapping, and a further input, to which a sequence controller 209 is coupled.

The means 207 for differently mapping has an output coupled to a communication channel for providing modulated channel input symbols to be input into the communication channel. The means for differently mapping performs mapping and modulation and preferably includes means for selecting signal constellation and means for selecting mapping (bit labeling).

The encoder 201 may be, for example, operative to encode the information bits using a convolutional encoding scheme, which can be adaptive, with a code rate which is smaller than or equal to 1, so that redundancy is introduced in order to protect the information bits. After interleaving, the set of processed values provided by the interleaver 203 is provided to the means 205 for differently precoding which is operative for differently precoding the successive sub-sets of processed values by exploiting the timing information provided by the sequence controller 209. The differently precoded successive sub-sets of processed values are provided to the means 207 for differently mapping. As mentioned above, the means 207 for differently mapping may optionally be operative for receiving the timing information in order to make sure that a correct decision as to a further processing of a respective sub-set of processed values provided by the means 205 for differently precoding (precoder) is made. The means 207 for differently mapping (mapper) is operative for mapping the successive sub-sets provided by the precoder onto different signal space constellations, as has been explained above. It is to be noted, that the successive sub-sets of processed values are processed sequentially. Hence, the set of channel input symbols provided by the means 207 for differently mapping is a serial, complex valued data stream which is preferably modulated applying the same signal constellation to all channel input symbols provided by the means 207 for differently mapping. Since the means 207 for differently mapping includes selectors for signal constellations and mappings, any mapping scheme can be performed for any subsequent sub-sets of processed values, so that a fine adaptation of the information throughput can be achieved.

The present invention further provides an apparatus for providing a plurality of information bits from a set of channel output symbols resulting from transmitting a set of channel input symbols through a communication channel. The inventive apparatus for providing the plurality of information bits is operative for performing processing steps which are inverse to those performed by the inventive apparatus for providing the set of channel input symbols, which has been explained above.

Fig. 3 shows a block diagram of the inventive apparatus for providing the plurality of information bits in accordance with a first embodiment of the present invention.

The apparatus of Fig. 3 comprises means 301 for differently re-processing having an input and an output, wherein the output is coupled to an input of a re-processing unit 303 having an output for providing information bits or an estimate thereof.

The means 301 for differently re-processing is operative for receiving a set of channel output symbols comprising successive sub-sets of channel output symbols, as is depicted in Fig. 3. As mentioned above, the set of channel output symbols is a received version of the set of channel input symbols being transmitted through the communication channel. At a transmitter, the set of channel input symbols comprises a number of successive sub-sets of channel input symbols, wherein the successive sub-sets of channel input symbols are obtained from differently processing successive sub-sets of processed values from a set of processed values, wherein the set of processed values is obtained from encoding a plurality of information bits using, for example, an encoding scheme having a coding rate which is smaller than 1.

In a first step, the means 301 for differently re-processing is operative for differently re-processing the number of successive sub-sets of channel output symbols to obtain successive sub-sets of re-processed values, which are provided via the output of the means 301 for differently re-processing to the re-processing unit 303. The re-processing unit 303 is operative for decoding the set of re-processed values comprising the successive sub-sets of re-processed values to obtain the plurality of information bits or to obtain an estimate thereof.

As mentioned above, the apparatus of Fig. 3 is operative for performing operations which are inverse to those performed at the transmitter. More specifically, the means 301 for differently re-processing may comprise means for differently demodulating (demodulator) the successive sub-sets of channel output symbols to obtain the set of re-processed values comprising the plurality of the successive sets of re-processed values, or means for differently de-mapping the successive sub-sets of channel output symbols using different signal space constellations to obtain the set of re-processed values. In particular, the means for differently demodulating may be operative for differently demodulating the successive sub-set of channel output symbols in accordance with different modulation schemes applied to modulation of the channel input symbols at the transmitter, as has been explained above. Accordingly, the means for differently de-mapping may be operative for applying different de-mapping schemes for subsequent sets of re-processed values which schemes are inverse to the different mapping schemes applied to mapping successive sub-sets of processed values at the transmitter.

For example, the means for differently demodulating is operative for demodulating a sub-set of channel output symbols using Gray or Set Partitioning demapping with a QAM or a PSK signal constellation of different size just to name a few possibilities to provide a sub-set of re-processed values to the re-processing unit 303.

Accordingly, the means for differently de-mapping may be operative for differently de-mapping the number of sub-sets of channel output symbols using different $2^m$-ary de-mapping schemes to obtain the successive sub-sets of re-processed values. The $2^m$-ary de-mapping schemes may be a Gray or Set Partitioning demapping scheme with a QAM or a PSK signal constellation of different size just to name a few possibilities.

In accordance with a further aspect of the present invention, the successive sub-sets of re-processed values may comprise precoded values being obtained by using different precoding schemes at the transmitter. In this case, the means 301 for differently re-processing may further comprise means for differently de-precoding the successive sub-sets of re-processed values using different de-precoding schemes to obtain successive re-precoded sub-sets of re-processed values as the successive sub-sets of re-processed values, wherein all successive sub-sets of re-processed values together result in the set of re-processed values provided to the re-processing unit 303. For example, the means for de-precoding (de-precoder) is a maximum a posteriori or a maximum likelihood de-precoder performing an iterative precoding scheme based on, for example, a trellis diagram.

The re-processing unit 303 may comprise a de-interleaver for de-interleaving the set of re-processed values to obtain de-interleaved values and a decoder for decoding the de-interleaved values to obtain the plurality of information bits or to obtain an estimate thereof.

The decoder may be operative for determining soft output values associated with the interleaved values, the soft output values indicating a reliability of the re-processing schemes, e.g. decoding, de-mapping, de-precoding and demodulation.

For example, the decoder may be operative for providing better estimates of the interleaved values during decoding the interleaved values. This side information can be provided to the means 301 for differently re-processing in order to improve a performance of the means for differently demodulating or the performance of the means for differently de-mapping or a performance of the means for differently de-precoding. For example, the decoder is coupled to the means for differently demodulating or to the means for differently de-mapping for iteratively reducing a demodulation error or a de-mapping error, so that better estimates of channel input symbols can be obtained.

Optionally, the decoder may only provide the soft output values associated with the de-interleaved values to the means for differently demodulating or to the means for differently de-mapping or to the means for differently de-precoding, so that a performance improvement at a current re-processing stages can be obtained. As mentioned above, the performance improvement can iteratively be achieved. For example, the decoder is coupled to the means for differently demodulating or to the means for differently de-mapping via an interleaver, so that the means 301 for differently re-processing receives better estimates of re-processed values. Starting from this information, the means 301 for differently re-processing can compare the re-processed values provided to the re-processing unit 303 with the better estimates of the re-processed values provided by the decoder so that, in a first iteration step, a first performance improvement can be achieved. In a further iteration step, the re-processing unit 303 receives improved estimates of re-processed values and the decoder feeds back, based thereon, better estimates to the means 301 for differently re-processing and so forth.

After a number of iteration steps, for example after 10 iteration steps, the receiving system converges to its stable receiving state.

Accordingly, the means for de-precoding may be operative for differently and iteratively de-precoding the successive sub-sets of processed values, wherein the means for de-precoding is coupled to the decoder for receiving better estimates of re-precoded values in order to perform iteration steps necessary for reducing a de-precoding error. For example, the means for differently de-precoding performs an iteration scheme based on a state diagram having distinct states and distinct transitions between the states, for example a trellis diagram. In this case, the means for de-precoding can be preconditioned by the information provided by the decoder so that, for example, a certain de-precoding state or a certain transition are chosen as initial parameters, or are excluded from further de-precoding steps. Accordingly, the means for differently de-mapping may be operative for focusing on certain de-mapping regions within the respective signal space constellations based on the information provided by the decoder, or to exclude the regions from further processing. Similar iterations can be performed by the means for differently de-mapping and/or by the means for differently de-precoding.

In accordance with a further aspect of the present invention, the inventive apparatus for providing the plurality of information bits comprises a sequence controller for assigning successive groups of channel output symbols to a successive sub-set of channel output symbols. For example, the sequence controller has a structure comparable to the structure of the sequence controller described above. In particular, the sequence controller may be operative for providing a timing information with respect to a time interval for processing a respective sub-set of channel output symbols and a timing information with respect to a time instant at which a re-processing of the respective sub-set should be started.

For example, the sequence controller is operative for receiving a sequence control information from a remote transmitter, the sequence control information indicating the number of sub-sets of channel output symbols and, optionally, a number of channel output symbols associated with a respective sub-set of channel output symbols.

Moreover, the inventive apparatus for providing the plurality of information bits may further comprise a processing controller being operative for providing information on a demodulation scheme associated with a current sub-set of channel output symbols to the means for differently demodulating or for providing information on a de-mapping scheme associated with the current sub-set of channel output symbols to be currently used to the means for differently de-mapping. Moreover, the processing controller may further be operative for providing information on a de-precoding scheme associated with the current sub-set of channel output symbols to the means for differently de-precoding.

In accordance with a further aspect of the present invention, the sequence controller and the processing controller may be implemented in the same control unit. Moreover, the necessary information on demodulation schemes or signal constellations, on de-mapping schemes or on de-precoding schemes can be provided by a remote transmitter, via for example, an additional information channel, to the processing controller and/or to the sequence controller.

Fig. 4 shows a block diagram of the inventive apparatus for providing a plurality of information bits in accordance with a further embodiment of the present invention. The apparatus comprises means 403 for demodulating signals being transmitted through the communication channel. The means 403 further performs differently de-mapping. The means 403 operative for differently de-mapping has an output coupled to a means 405 for differently de-precoding and a further input, to which an output of an interleaver 407 is coupled. The interleaver 407 is further coupled to a further input of the means 405 for differently de-precoding. An output of the means 405 for differently de-precoding is coupled to a de-interleaver 409 having an output coupled to an input of a decoder 411. The decoder 411 has an output for providing information bits or estimates thereof. Furthermore, the decoder 411 is coupled to an interleaver for providing better estimates of de-mapped values to the means 403 for differently de-mapping in order to perform the iteration steps mentioned above, or to provide better estimates of the de-precoded values to the means 405 for differently de-precoding, so that the performance increasing iteration steps mentioned above can be performed.

In order to describe the inventive concept in more detail, in the following, a data transmission over a wireless channel is considered. Due to the expensive and limited available bandwidth, the development of bandwidth efficient transmission schemes is of ongoing interest. The bandwidth efficient transmission scheme is a Bit-interleaved Coded modulation (BICM), that is, the serial concatenation of an encoder, an interleaver n and a symbol mapper.

Fig. 5 shows a corresponding system model comprising an encoder 501, an interleaver 503, a mapper 505, a channel 507, a demapper 509, a de-interleaver 511 and a decoder 512 connected in series. Additionally, there is a feedback loop between the decoder 512 via an interleaver 513 to the demapper 509.

The main advantage of the BICM is the maximized diversity order obtained by bit-wise interleaving and simple and flexible implementation possibilities. In order to improve the error rate performance of the BICM, different iterative decoding schemes should be implemented. Both iterative decoding of parallel concatenated codes as well as of serial concatenated codes may be used. The channel code can be e.g. a convolutional code, a Low Density Parity Check (LDPC) code, a parallel concatenated turbo code or a serial concatenated code. Since mapping introduces dependencies between the bits, it can also be used as rate 1 code. Thus, a feedback from the channel decoder to the demapper may be used, with an iterative decoding between the outer channel code and the mapping as an inner code. Together with the mapping, an additional precoder may be used as inner code.

In the following, the problem of adapting a transmission system to the time varying channel in order to maximize the data throughput is considered.

From information theory it is known that the channel quality places fundamental limitations on the number of transmitted information bits per transmission interval. The channel quality is determined by the separation distance between transmitter and receiver (large-scale signal attenuation) and the rapid fluctuations of the signal attenuation over short travel distances or short time durations (small-scale signal attenuation, fading).

Thus, a number of information bits per transmitted symbol should be adapted to the time-varying channel quality. In accordance with the present invention, an adaptation using Adaptive Modulation Encoding (AMC) scheme, i.e. by varying the modulation scheme (e.g. QPSK, 16-QAM) and the channel coding rate is performed.

The channel code rate can be varied in small steps using appropriate puncturing patterns. The problem is how to obtain an exact adaptation to the channel quality using different modulation schemes. A small set of possible modulation schemes allows only a very rough (course) adaptation, as has been explained above. On the other hand, a support of a large set of possible modulation schemes requires a higher complexity at transmitter and receiver. An exact adaptation to the channel quality is not possible since even with a large number of modulation schemes, the performance between the modulation schemes remains quite different. Furthermore, in addition to the throughput, it is of interest to select the error rate or the complexity in terms of required number of iterations of the system, depending on the time varying channel quality. There exists a trade-off between the information data throughput, the complexity and the error rate. This trade-off can be adjusted using a large number of modulation schemes or, if the feedback from the channel decoder to the demapper is used, a large number of mappings and puncturing schemes for the precoder. However, the transmitter and receiver must support all these possibilities, which results in an increased complexity, as has been mentioned above.

The present invention provides a possibility to use different modulation schemes, mappings or precoder architectures within one code block (irregular modulation schemes, irregular mappings and/or irregular precoder) in order to adapt the system to the time varying channel.

For example, if an irregular modulation scheme is used where a part of a block of coded bits is mapped 2QPSK (2 bits per symbol) and the other part to 16-QAM (4 bits per symbol), the ratio can be chosen such that an average of 3 coded bits per symbol (like with e.g. 8-PSK) would be transmitted. A segmentation of the coded bits to different modulation schemes would preferably take place after the interleaver on the transmitter side. Due to the interleaver, the different reliability of the bits mapped to different modulation schemes does not affect the channel decoding process at the receiver. For example, the performance of the combined QPSK and 16-QAM scheme according to the present invention is identical to the performance using 8-PSK.

The inventive idea of the considered example can be extended to irregular mappings and/or irregular precoder to optimize the trade-off throughput versus complexity versus error rate. Different precoder and/or mappings can be used within one code block. Different precoder or mappings can be obtained through different puncturing schemes. Again, if the segmentation is made after the interleaver at the transmitter, the channel decoder does not see any difference if a combination of a precoder and/or mappings is used or if a single precoder and/or mapping with the average characteristic is used.

By the way of example only, in the following a bit interleaved code modulation scheme for bandwidth efficient transmission over fading channels is considered.

Iterative decoding schemes have shown an outstanding performance in many different application areas. For BICM, as an example, three relevant combinations of channel code, precoder and high-order signal constellation mapping out of the possibilities mentioned above will be considered in the following.

1. Parallel concatenated "turbo" code with Gray mapping.

2. Serial concatenated code, channel code as outer code, mapping as inner code.

3. Serial concatenated code, channel code as outer codes, precoder as inner code.

In the first system, as is described in A. Glavieux S. Le Goff and C. Berrou, "Turbo-codes and high spectral efficiency modulation," in IEEE International Conference on Communications (ICC), New Orleans, May 1994, pp. 654-649, iterations between two parallel concatenated codes are carried out at the receiver. In the two other systems as is described in X. Li and J. Ritcey, "Bit-interleaved coded modulation with iterative decoding using soft feedback," Electronic Letters, vol. 34, no. 10, pp. 942-943, May 1998, J. Speidel S. ten Brink and R. Yan, "Iterative demapping and decoding for multilevel modulation," in Proc. IEEE Globecom Conference, Sidney, November 1998, pp. 579-584, S. Dolinar D. Divsalar and F. Pollara, "Serial concatenated modulation with rate-1 inner code," in Proc. IEEE Globecom Conference, San Francisco, November 2000, pp. 777-782, and in M. Tüchler, "Design of serially concatenated systems for long or short block lengths," in IEEE International Conference on Communications (ICC), respectively, iterations are performed between the inner code, i.e. the joint decoder (if a precoder is used) and demapper, and the outer channel code at the receiver, similar to iterative decoding a serial concatenated code, as is described in G. Montorsi S. Benedetto, D. Divsalar and F. Pollara, "Serial concatenation of interleaved codes: Performance analysis, design, and iterative decoding", IEEE Transactions on Information Theory, vol. 44, no. 3, pp. 906-926, May 1998.

In accordance with the present invention, the modulation scheme, the mapping and the precoder architecture can be irregular, i.e. different within one code block.

Fig. 6 shows the above considered system model comprising an outer encoder 601 coupled via an interleaver 603 to a serial to parallel converter 605 (S/P). The S/P 605 has a number of outputs coupled to a mapper 607. The mapper 607 is coupled via a channel 609 to a demapper 611 having a number of outputs coupled to a parallel to serial converter 613 (P/S). The P/S 613 is coupled via an interleaver 615 to an outer decoder 616 having an output for providing better estimates. The outer decoder 616 has a further output coupled via the interleaver 617 to a further input of the demapper 611.

A block of data bits is encoded by the outer encoder 601 with rate R and bit interleaved by the random interleaver 603. The coded and interleaved sequence is denoted by c; m consecutive bits of the sequence c are grouped to form the subsequences $C_k=(C_k(1), ..., C_k(m))$. Each subsequence $c_k$ is mapped to a complex symbol $s_k(\mu)$ chosen from the $2^m$-aray signal constellation X according to the labeling map p. Before the mapping, a recursive precoder can be inserted.

The channel 609 is described by $r_k=a_ks_k+n_k$, where $a_k$ denotes the fading coefficient, and $n_k$ is the complex zero-mean Gaussian noise with variance $\sigma_n^2 = N_0 / 2E_s$ in each real dimension. The signal-to-noise ratio is defined as

$$\frac{E_s}{N_0} = \frac{E_b}{N_0} \cdot R \cdot m .$$

At the receiver, the joint de-mapper and decoder (if a precoder is used) processes the received complex symbols $r_k$ and the corresponding a priori log-likelihood ratios (LLRs) $L_a(C_k(i)\ ) = \log\left(\frac{P(C_k(i)=0)}{P(C_k(i)=1)}\right)$ of the coded bits and output the extrinsic LLRs.

$$L_e(C_k(i)) = \log \frac{P(C_k(i) = 0 \mid r_k, L_a(C_k))}{P(C_k(i) = 1 \mid r_k, L_a(C_k))} - L_a(C_k(i)),$$

wherein $C_k(i)$ denotes the binary random variable with realizations $C_k(i) \in \{0,1\}$.

Let $\chi_b^i$ denote the sub-set of symbols $s_k \in \chi$ whose bit levels have the value $b \in \{0,1\}$ in position $i \in \{1, ..., m\}$, i.e. $\chi_b^i = \{s_k = \mu(c_k), \forall c_k \in \{0,1\}^m \mid c_k(i) = b\}$. Using Bayes' rule and taking the expectation of $p(r_k|s_k)$ over $P(s_k|C_k(i)=b)$, $s_k \in \chi_b^i$ yields

$$L_e(C_k(i)) = \log \frac{\sum_{s_k \in \chi_0^i} p(r_k \mid s_k) \cdot P(s_k \mid C_k(i) = 0)}{\sum_{s_k \in \chi_1^i} p(r_k \mid s_k) \cdot P(s_k \mid C_k(i) = 1)}.$$

The first term $p(r_k|s_k)$ is computed according to the channel model out of the Gaussian distribution:

$$p(r_k \mid s_k) = \frac{1}{\sqrt{2\pi\sigma_n}} e^{-\frac{|r_k - a_k \cdot s_k|^2}{2\sigma_n^2}}.$$

The second term $P(s_k|C_k(i)=b)$ is computed from the a priori information of the individual bit:

$$P(s_k \mid C_k(i) = b) = \prod_{j=1, j \neq i}^{m} \frac{1}{1 + e^{-L_a(C_k(j))}} e^{-L_a(C_k(j)) \cdot c_k(j)}.$$

The extrinsic estimates $L_e(C_k(i))$ are de-interleaved and applied to the APP channel decoder. Performing iterative decoding, extrinsic information about the coded bits from the decoder is fed back and regarded as a priori information $L_a(C_k(i))$ at the demapper. During the initial de-mapping step, the a priori LLR are set to zero.

In the following, convergence prediction using EXIT (Extrinsic Information Transfer) charts will be considered.

The inventive irregular schemes can be easily described based on the average mutual information between the coded bits and the output of the demapper as a function of the a priori input. The iterative exchange of this mutual information between the demapper and the decoder can be visualized in EXIT charts, as is described in S. ten Brink, "Convergence behavior of iteratively decoded parallel concatenated codes," IEEE Transactions on Communications, vol. 49, no. 10, pp. 1727-1737, October 2001.

For the sake of notational simplicity, the bits of the coded sequence c of length N are denoted by $C_n$ and adapt to values C={-1; +1}.

The a priori LLRs of the demapper are assumed to be Gaussian distributed and fairly uncorrelated over many iterations. These assumptions hold for long interleavers. Therefore, the a priori LLRs can be modeled by an independent Gaussian random variable with mean $\mu_L \cdot c_n$ and variance $\sigma_L^2$. This allows to break up the iterative receiver and to analyze the demapper and the decoder separately. Since $\mu_L = \sigma_L^2/2$, the Gaussian distribution of the LLRs can be approximated by a single parameter. Especially, predicting the output LLR distribution of the demapper depending on a given a priori LLR distribution is of interest. Instead of using the variance $\sigma_L^2$ as parameter to characterize the distributions, the mutual information I(L;C) between the coded bits and the LLRs is a more accurate and robust measure.

The LLRs are distributed according to the pdf $P_L(l|C=C)$. The mutual information can be numerically evaluated by the following formula:

$$I(L;C) = \frac{1}{2} \cdot \sum_{c=1,+1} \int_{-\infty}^{+\infty} p_L(i \mid C=c) \cdot \log_2 \frac{2 \cdot p_L(l \mid C=c)}{p_L(l \mid C=-1) + p_L(l \mid C=+1)} dl$$

The pdf $p_L$(-l|$C$=-1) and $p_L$(l|$C$=+1) have to be determined by Monte Carlo simulation and histogram measurements. If the pdfs are both symmetric, i.e.

$$p_L(l \mid C=+1) = p_L(-l \mid C=-1),$$

and consistent, i.e.

$$p_L(l \mid C=+1) = p_L(-l \mid C=+1) \cdot \exp(l)$$

the mutual information can also be computed using the time average

$$I(L;C) = 1 - \frac{1}{N} \sum_{n=1}^{N} \log_2(1 + e^{-c_n L_n}).$$

For the serial concatenated BICM system, the transfer function of the demapper $T_m$(i) and of the decoder $T_c$ (i) is a function of the mutual information i shows the relation between the input mutual information and the output mutual information of the demapper and decoder, respectively. The demapper proceeds the information from the channel, where the signal-to-noise ratio $E_s/N_0$ is set to a constant value, and the a priori information from the demapper. The decoder receives only input information from the demapper. Thus, only the demapper transfer function depends on $E_s/N_0$.

It is interesting to note that the area A under the transfer function of the demapper corresponds approximately to $A \approx C(\chi)/m$, where $C(\chi)$ denotes the channel capacity for the signal constellation $\chi$.

For the parallel concatenated turbo code, both constituent codes proceed the input information from the channel, and the a priori information from the other decoder. If the transfer functions of the demapper/decoder and, with flipped axes, of the other decoder are plotted into a single diagram, one can predict the actual staircase trajectory of the mutual information. A crossing between the two functions would cause the iterative process to stop. Examples of EXIT charts are given in the following, where characteristics of main system components in accordance with the present invention will be described.

Fig. 7 depicts transfer functions of different channel codes used as outer codes in a serial concatenated system.

The "optimal" code would output ideal extrinsic information once the input mutual information corresponding to the capacity is reached.

Convolutional codes with low memory gather more extrinsic information for input mutual information $I_{in}$<0.5 while for input neutral information $I_{in}$>0.5, codes with high memory output more extrinsic information. It is to be pointed out that different generator polynomials or a change from recursive systematic convolutional codes (RSC) to non-systematic non-recursive codes (NSC) has only little influence on the shape of the code transfer functions. For a given code memory, generator polynomials which maximize the free Hamming distance of the codes will be chosen.

The transfer function of the parallel concatenated turbo code is generated by considering the turbo decoder as a "black box" and by plotting the output mutual information as a function of the channel input mutual information after a certain number of iterations between the two component decoders. Above a certain amount of input information and a couple of iterations, one gets close to ideal output information.

Fig. 8 demonstrates the corresponding transfer functions of one constituent code with different memory inside the turbo decoder (transfer functions for parallel concatenated codes in the EXIT chart).

Referring to the inventive mapping concept, the applied labeling map is a crucial design parameter for the considered BICM systems. By the way of example only, in the following two characteristic 16-QAM mappings will be considered, as shown in Fig. 9. As has been explained above, the decision regions may be determined using the decoder's information on better estimates provided to the means for de-mapping.

First, a case where no a priori information about the coded bits is available at the demapper (e.g. during the initial de-mapping step) will be considered. The shaded regions shown in Fig. 9 correspond to the decision regions for bit i having the value 1 (sub-set $\chi_1^i$), the un-shaded regions correspond to the decision regions for bit i = 1 having the value 0 (sub-set $\chi_0^i$). If a symbol error occurs within one decision region, no error will be made on the corresponding bit. Large decision regions provide a high protection for the corresponding bit, since the number of nearest neighbors, i.e. the number of symbols $\hat{s}_k \in \chi_b^i$ at minimum Euclidean distance from $s_k \in \chi_b^i$ is minimized. In other words, the Hamming distances between symbols in small Euclidean distances should be minimized in order to minimize the number of bit errors for one symbol error. Preferably, Gray mapping, where each symbol has at most one nearest neighbor, is the optimum labeling strategy without a priori knowledge.

The performance with ideal a priori information at the demapper represents the achievable gain over the iterations. In this case, all bits are perfectly known at the demapper, except for the bit to be detected, since only the extrinsic information is used. The a priori known bits select a pair of symbols which differ only in one bit i to be detected. Possible symbol pairs for bit i = 1 are also depicted in Fig. 9. The symbol pairs consist of the sub-sets $\chi_0^i$ and $\chi_1^i$ which are reduced through ideal a priori knowledge from the shaded and un-shaded regions to one symbol, denoted by the filled and unfilled signal points, respectively.

With Gray mapping, the number of distances at minimum Euclidean distances is not reduced through a priori knowledge. Thus, only small performance improvement can be achieved over the iterations. With $M16^a$, one can observe in Fig. 9 that the Euclidean distances between the decision regions $\chi_1^i$ and $\chi_0^i$, i.e. the remaining symbol pairs are strongly increased.

The EXIT charts described above visualize the impact of the distance properties on the performance of the iterative system. In accordance with the present invention, the EXIT charts can be applied to determining an optimum processing strategy for each subsequent set of processed values or for each subsequent set of channel output symbols.

Fig. 10 shows transfer functions of different mappings in the EXIT charts. For an AWGN channel of the 16-QAM Gray and $M16^a$ mapping, together with the transfer function of a 4-state, rate-1/2 convolutional code and a simulated trajectory which passes through the tunnel.

In the following the values of the demapper functions with no a priori knowledge and ideal a priori knowledge will be denoted by $I_0$ and $I_1$ respectively. High values of $I_0$ and $I_1$ are desirable in order to avoid an early crossing of the transfer functions, which would cause the iterative process to stop, and to reach low error rates respectively. Since the capacity is independent of the applied mapping, the area under transfer functions remain the same, resulting in a trade-off between $I_0$ and $I_1$. As is expected, Gray mapping has the highest $I_0$ but no performance improvement is expected with a priori information. With $M16^a$ mapping, the performance with ideal a priori information, i.e. the possible performance improvement over the iteration, is maximized.

All the memoryless mappings described above have in common, that the error probability at high SNR will not decrease with interleaver length. Even with perfect a priori information, the output LLRs of the demapper do not approach infinity and $T_m(1)\neq 1$ in the EXIT chart. This thus suggests to use a recursive precoder before mapping with joint de-mapping/decoding. The recursive structure allows to reach error free performance with an interleaver length going to infinity at the expense of increased complexity.

The precoder (means for precoding) can be described in a general way through the state space equations.

$$s_{k+1} = s_k A + x_k B \quad \text{und} \quad y_k = s_k C^T + x_k D$$

where $s_k = (s_k^{(1)}, \ldots, s_k^{(M)})$ describes the precoder memory $x_k=(x_k(1),\ldots,x_k(m))$ the m precoder input bits and $y_k$ the precoder output. A is a MxM matrix, B and C are mxM matrices, and D is a mxm matrix.

Considering a low complexity memory-1 precoder, A = 1 since the precoder must be recursive and B=[1,1,..., 1] since the precoder state has to be dependent on all input bits. D is a scrambling matrix and can be set to the mxm

identity matrix $I_m$. The matrix C is the main design parameter and determines to which outputs the memory output is connected to.

Fig. 11 shows the resulting precoder architecture. The precoder comprises a serial to parallel converter 1101 having a plurality of outputs and an input. Each of the plurality of outputs is coupled via an optional adder 1103 to an associated input of a mapper 1105, the mapper 1105 further having an output.

Additionally, the precoder of Fig. 11 comprises a scrambling block 1107 having an input and an output, wherein the output is coupled to the further inputs of the adders 1103. Furthermore, the output of the scrambling block 1107 is fed back via an adder 1109 to an input of the scrambling block 1007. The adder 1109 has a further input, to which a sum of total output signals provided by the serial to parallel converter 1101 is provided, wherein the addition is performed by an adder 1111.

In order to switch between different precoding schemes, a switch can easily be implemented by puncturing.

Fig. 12 shows a further embodiment of a precoder architecture comprising a precoder 1201 placed before demultiplexing performed by the serial to parallel converter 1101.

However, due to a parallel processing, the architecture of Fig. 11 offers more possibilities in order to optimize the system and if the following is set

$$A=1; B=C=[1,1,\ldots,1]; D=\begin{bmatrix}1 & 0 & 0\\ \vdots & \ddots & 0\\ 1 & \cdots & 1\end{bmatrix},$$

Then the systems shown in Fig. 11 and 12 are equivalent.

Fig. 13 shows transfer functions with different memory-1 precoder for 16-QAM demapper with Gray mapping in combination with different precoders described by the associated C matrices and with a precoder placed before multiplexing as described above. Preferably, a precoder maximizing the mutual information $T_m(0)$ without a priori information has a C matrix equal to [1, 0, ..., 0]. In contrast to memoryless mappings, there is no trade-off between good performance without and with ideal a priori information since all considered precoders reach $I_1=1$. The area $A \approx C(\chi)/m$ under the transfer functions remains the same.

Instead of changing the structure of the precoder, one can choose a fixed precoder and vary the mapping. However, this approach limits the design possibilities since the performance without a priori information will be lower for any mapping different from a Gray mapping.

In accordance with the present invention, instead of using the same signal constellation, mapping or precoder over one code block of length N is used. The code block is divided in L sub-blocks of length $\alpha_k N$. Each sub-block can be mapped to different signal constellations with $m_k$ coded bits per symbol using various mappings or precoders.

Fig. 14 shows a construction of irregular schemes. A block of values 1401 comprises, by the way of example only, two sub-sets, each sub-set comprising a different number of code bits (coded or interleaved values), wherein $m_{IR}$ denotes the average number of bits (coded bits or interleaved bits) per symbol (channel input symbol). In accordance with the present invention, the ratios $\alpha_k$ satisfy the conditions

$$\sum_{k=1}^{L}\alpha_k = 1,\quad \frac{1}{\sum_{k=1}^{L}\alpha_k / m_k} = m_{IR}, \text{ und } \alpha_k \in [0,1], \forall k .$$

The second condition follows from a computation of the symbol block length $N / m_{IR} = \sum_{k=1}^{L} \frac{N \cdot a_k}{m_k}$.

The ratios $\alpha_k$ can be determined by the above-mentioned sequence controller performing timing control. More specifically, the sequence controller may be operative to assign $\alpha_k N$ successive processed values to a k-th sub-set of the number of sub-sets, wherein the sequence controller is operative to choose or to determine $\alpha_k$ such that the above condition is satisfied.

At a receiver, each sub-block (sub-set) is separately mapped and, if a precoder is used, decoded. Let denote the pdf of the resulting L-values for the $k^{th}$ sub-block by $p_k$.

The distribution $p_{IR}$ of the joint L-values is the mean over the distributions $p_k$ of the sub-blocks

$$p_{IR} = \sum_{k=1}^{L} \alpha_k p_k \ .$$

Moreover, if the L-values are both symmetric and consistent, it follows from the above equation that the transfer function $T_{IR}$ of the joint demapper/decoder is given by

$$T_m^{IR}(i) = \sum_{k=1}^{L} \alpha_k T_m^k(i) \ ,$$

where $T_m^k(i)$ is the transfer function of the demapper/decoder for sub-block k. Thus, the transfer function $T_m^{IR}(i)$ is generated out of the linear combination of the transfer functions $T_m^k(i)$.

In the following, further embodiments on how to use the inventive irregular modulation schemes, mappings and precoder for the three BICM systems mentioned above with iterative decoding will be described. For the sake of descriptional simplicity, the code rate is fixed and set to R=1/2 for all systems.

With a parallel concatenated "Turbo" code, only Gray mapping without a precoder is considered, by the way of example only. Thus, only the modulation scheme will be irregular. Through an irregular modulation scheme, either the data throughput or the trade-off between throughput and complexity in terms of required number of iterations can be optimized.

Fig. 15 depicts the EXIT chart for the UMTS turbo code together with QPSK and 16-QAM Gray mapping at $E_s/N_0 = 4dB$. With 16-QAM, the early crossing of the transfer characteristics of the demapper and the decoder results in a high error rate. With QPSK, the maximum possible data throughput cannot be fully exploited.

Using an inventive irregular modulation scheme, a demapper transfer function which lies between the function of QPSK and 16-QAM can be generated. As has been derived above, the demapper transfer function of the irregular scheme is a linear combination of the underlying transfer functions. The number of possible transfer functions depends on the number of bits used to characterize the ratio between the underlying modulation schemes.

Fig. 16 shows the corresponding transfer characteristics of the constituent parallel concatenated codes. Again, with 16-QAM, the early intersection of the transfer functions of the two codes results in high error rates while with the QPSK, the maximum possible data throughput is not achieved.

In order to optimize the data throughput, the ratios can preferably be set to $\alpha_1$=0.35 for QPSK and $\alpha_2$=0.65 for 16-QAM, as is shown in Figs. 15 and 16, resulting in an average of $m_{IR}$=2.96 coded bits per symbol. A high number of turbo code iterations is required, but the throughput is optimized.

In order to optimize the system for a given number of 4 turbo code iterations, $\alpha_1$=0.65 for QPSK and $\alpha_2$=0.35 for 16-QAM is set, as is shown in Figs. 15 and 16. The reduced complexity is achieved by a reduction of the throughput: $m_{IR}$=2.42 coded bits per symbol can be transmitted.

Referring to the second system mentioned above, with the mapper as an inner coder, the modulation scheme as well as the mapping can be irregular. This allows more flexibility. As an example, in the following 16-QAM and M16$^a$ and Gray mapping together with QPSK Gray mapping as underlying schemes will be considered. The code is a 4-state convolutional code, $E_s/N_0 = 4dB$. Using only 16-QAM with M16$^a$ or Gray mapping would result in a high error rate due to the early crossing of the transfer functions, as is depicted in Figs. 17, 18 and 19 showing the transfer functions of demapper, irregular modulation and mapping scheme. By adjusting the ratios $\alpha_1$ for QPSK with Gray mapping, $\alpha_2$ for 16-QAM with Gray mapping and $\alpha_3$ for 16-QAM with M16$^a$ mapping, different systems for different requirements can be designed. In the following, three combinations will be considered by the way of example.

1. High throughput, high complexity, low error rate
This set-up is shown in Fig. 17. The throughput is high ($m_{IR}$=2.96) and a high value of $I_1$ with ideal a priori information is reached in the EXIT chart. Preferably, at least 10 iterations are required.
2. High throughput, low complexity, high error rate.
The number of iterations can be reduced for the same throughput ($m_{IR}$=2.96) if the ratio $\alpha_2$ for 16-QAM with Gray mapping is increased. As is shown in Fig. 18, it can be observed that only 5 iterations are required.
3. Low throughput, low complexity, low error rate.
In Fig. 19, the value of $I_1$ with ideal a priori information in the EXIT chart is similar to that shown in Fig. 17, resulting in a similar error rate. Only 5 iterations are required. However, the throughput may be reduced ($m_{IR}$=2.66), since

the ratio $\alpha_1$ of QPSK with Gray mapping is increased.

It is to be noted at this point, that systems with a low number of required iterations also perform better at low $E_s/N_0$ than systems with a high number of required iterations.

In reference to the third system mentioned above, if a recursive precoder is inner code, the error rate can be arbitrarily reduced with a growing interleaver length, as has been described above, if the transfer characteristic of the channel decoder and the joint demapper/decoder do not cross. Using the inventive irregular modulation scheme, the data throughput can be optimized as is performed in the previously discussed systems. As an example, in the following a precoder with C=[1,0,0,0] and 16-QAM and C=[1,0] for QPSK in combination with Gray mapping will be considered. The code is a 16-state convolutional code, $E_s/N_0=4dB$. If $\alpha_1$=0.35 for QPSK and $\alpha_2$=0.65 for 16-QAM, a high throughput ($m_{IR}$=2.96) can be observed. At least 10 iterations are required, as is depicted in Fig. 20 showing transfer functions of demapper, irregular modulation and mapping scheme.

Two or more transfer fuctions of a different precoder, depicted in Fig. 13, can be linearly combined in order to obtain an optimal match to the transfer characteristic of the channel decoder.

Depending on certain implementation requirements, the inventive methods can be implemented in hardware or in software. The implementation can be performed using a digital storage medium, in particular a disk or a CD having electronically readable control signals, which can co-operate with a programmable computer system such that the inventive methods are performed. Generally, the present invention is, therefore, a computer product with a program code stored on a machine-readable carrier, the program code being operative for performing the inventive methods when the computer program product runs on a computer. In other words, the inventive methods are, therefore, a computer product having a program code for performing the inventive methods when the computer program runs on a computer.

## Claims

1. Apparatus for providing a set of channel input symbols, the apparatus comprising:

    a processing unit (101) for encoding a plurality of information bits, the processing unit (101) being operative for providing a code block of length N;
    means (105) for providing channel capacity information indicating an achievable number of information bits per channel input symbol;
    a sequence controller (209) for, using the capacity information, dividing the code block into L successive sub-blocks k, with $k \in 1...L$, of length $\alpha_k N=m_k$ such that each sub-block k covers a ratio $\alpha_k \in [0,1]$ of the code block and that $\sum_{k=1}^{L} \alpha_k = 1$, and $\frac{1}{\sum_{k=1}^{L} \alpha_k / m_k} = m_{IR}$,
    means (103, 207) for differently processing the successive sub-blocks by differently modulating the successive sub-blocks to provide the set of channel input symbols so that, within each sub-block k, a different number $m_k$ of bits of the respective subset is used per obtained channel input symbol,
    and so the average number $m_{IR}$ of information bits per channel input symbol is closer to the achievable number of information bits per channel input symbol than a number of information bits per channel input symbol resulting when applying the same processing scheme to the number of successive sub-blocks;

    **characterized in that** the means (103) for differently processing further comprises means (205) for, using different precoding schemes having a code rate equal to 1, differently precoding the successive sub-blocks to obtain successive precoded sub-blocks to be modulated to obtain the set of the channel input symbols.

2. Apparatus in accordance with claim 2, wherein the means (207) for differently mapping is operative to map $m_k$ successive processed bits of a sub-block k to a $2^{mk}$-ary signal space constellation.

3. Apparatus in accordance with claim 2, wherein the means (207) for differently mapping is operative for using a Gray code, a QAM scheme, a PSK scheme or a QPSK scheme.

4. Apparatus in accordance with any of claims 1 to 3, wherein the different precoding schemes are recursive for each sub-block.

5. Apparatus in accordance with any of claims 1 to 4, wherein the means for differently modulating is operative for modulating successive sub-block onto different signal space constellations using a different modulation scheme for each sub-block to obtain the channel input symbols.

6. Apparatus in accordance with claim 5, wherein the means for differently modulating is operative to map $m_k$ successive bits of a sub-block to a $2^{mk}$-ary signal space constellation to provide the channel input symbols.

7. Apparatus in accordance with claim 6, wherein the means for differently modulating is operative to use a QAM or a PSK or a QPSK modulation scheme.

8. Apparatus in accordance with any of the preceding claims, wherein the processing unit (101) comprises an encoder (201) having a code rate being smaller than 1 for encoding the plurality of information bits to provide coded bits, and an interleaver (203) for interleaving the coded bits to provide interleaved bits forming the code block.

9. Apparatus in accordance with claim 8, wherein the means for differently mapping is adapted to map the interleaved bits onto the different signal space constellation to provide signal space constellation values.

10. Apparatus for providing a plurality of information bits from a set of channel output symbols resulting from transmitting a set of channel input symbols through a communication channel, wherein the set of channel input symbols comprises a number L of successive sub-sets of channel input symbols, the number L of successive sub-sets of channel input symbols being obtained from differently processing L successive sub-blocks k, with $k \in 1...L$, of length $\alpha_k N = m_k$ from a code block of length N, with $\alpha_k \in [0,1]$, and $\sum_{k=1}^{L} \alpha_k = 1$, and with, within each sub-block k, a different number $m_k$ of bits of the respective subset being used per obtained channel input symbol, with $\frac{1}{\sum_{k=1}^{L} \alpha_k / m_k} = m_{IR}$, the code block being obtained from encoding the plurality of information bits, wherein the successive sub-blocks are differently precoded using different precoding schemes having a code rate equal to 1, the apparatus comprising:

a sequence controller configured for receiving sequence control information from a remote transmitter, the sequence control information indicating the number L of sub-sets of channel output symbols and for assigning L successive groups of channel output symbols to L successive sub-sets of channel output symbols;
means (301, 403) for differently re-processing the number L of successive sub-sets of channel output symbols by differently demodulating the successive sub-sets of channel output symbols to obtain L successive re-processed sub-blocks k of length $m_k$ by obtaining, within each sub-set k of channel output symbols, different number $m_k$ of bits per channel output symbol; and
a re-processing unit (303, 411) for decoding the successive re-processed sub-blocks to obtain the plurality of information bits, **characterized in that**
the means (301) for differently re-processing further comprises means means (405) for differently de-precoding the successive demodulated sub-blocks using different de-precoding schemes to obtain successive de-precoded sub-blocks as the successive re-processed sub-blocks using different de-precoding schemes having a code rate equal to 1.

11. Apparatus in accordance with claim 10, wherein the means (301) for differently re-processing comprises the means for differently demodulating, wherein the means for differently demodulating is operative for demodulating a subset of channel output symbols using a QAM demodulation scheme, a QPSK demodulation scheme, or a PSK demodulation scheme to provide a re-processed sub-block of the set of successive re-processed sub-blocks.

12. Apparatus in accordance with claim 10 or 11, wherein the means (403) for differently demapping is operative for differently demapping the sub-sets of channel output symbols using different $2^m$-ary demapping schemes to obtain the successive re-processed sub-blocks.

13. Apparatus in accordance with claim 12, wherein the demapping schemes belong to a Gray decoding scheme, to a QAM demapping scheme, to a QPSK demapping scheme or to a PSK demapping scheme.

14. Apparatus in accordance with any of claims 10 to 13, wherein the means for de-precoding uses a maximum aposteriori or a maximum likelihood criterion for de-precoding.

**15.** Apparatus in accordance with any of claims 10 to 14, wherein the re-processing unit (303) comprises a de-interleaver for de-interleaving the set of re-processed blocks to obtain the interleaved values, and a decoder for decoding the de-interleaved values to obtain the plurality of information bits.

**16.** Apparatus in accordance with claim 15, wherein the decoder is operative to determine soft output values associated with the de-interleaved values.

**17.** Apparatus according to claim 16, wherein the decoder is coupled to the means for differently de-precoding or to the means for differently demapping for iteratively reducing a demodulation error or a demapping error.

**18.** Apparatus in accordance with any of claims 10 to 17, wherein the means (405) for differently de-precoding is operative for iteratively de-precoding the successive sub-blocks, wherein the re-processing unit (303) comprises a de-interleaver for providing de-interleaved values, and a decoder for decoding the de-interleaved values, wherein the decoder is operative to determine soft output values associated with the de-interleaved values, and wherein the decoder is coupled to the means (405) for differently de-precoding for iteratively reducing a de-precoding error.

**19.** Apparatus in accordance with any of claims 10 to 18, further comprising a processing controller being operative for providing information on a demodulation scheme associated with a current sub-set of channel output symbols to the means for differently demodulating and for providing information on a de-mapping scheme associated with the current sub-set of channel output symbols to the means for differently de-mapping.

**20.** Method for providing a set of channel input symbols, the method comprising the following steps of:

encoding a plurality of information bits to provide a code block of length N;
using the capacity information, dividing the code block into L successive sub-blocks k, with $k \in 1...L$, of length $\alpha_k N = m_k$ such that each sub-block k covers a ratio $\alpha_k \in [0,1]$ of the code block and that $\sum_{k=1}^{L} \alpha_k = 1$, and $\frac{1}{\sum_{k=1}^{L} \alpha_k / m_k} = m_{IR}$, differently processing the successive sub-blocks by differently modulating the successive sub-blocks to provide the set of channel input symbols so that, within each sub-block k, a different number $m_k$ of bits of the respective subset is used per obtained channel input symbol, and so the average number $m_{IR}$ of information bits per channel input symbol is closer to the achievable number of information bits per channel input symbol than a number of information bits per channel input symbol resulting when applying the same processing scheme to the number of successive sub-blocks;
providing channel capacity information indicating an achievable number of information bits per channel input symbol;

**characterized in that** the step of differently processing further comprises, using different precoding schemes having a code rate equal to 1, differently precoding the successive sub-blocks to obtain successive precoded sub-blocks to be modulated to obtain the set of the channel input symbols, to adjust an error rate and a complexity in terms of required number of decoding iterations at the receiver side to obtain the set of channel input symbols.

**21.** Method for providing a plurality of information bits from a set of channel output symbols resulting from transmitting a set of channel input symbols through a communication channel, wherein the set of channel input symbols comprises a number L of successive sub-sets of channel input symbols, the number L of successive sub-sets of channel input symbols being obtained from differently processing L successive sub-blocks k, with $k \in 1...L$, of length $\alpha_k N = m_k$ from a code block of length N, with $\alpha_k \in [0,1]$, and $\sum_{k=1}^{L} \alpha_k = 1$, and with, within each sub-block k, a different number $m_k$ of bits of the respective subset being used per obtained channel input symbol, with

$$\frac{1}{\sum_{k=1}^{L} \alpha_k / m_k} = m_{IR},$$ the code block being obtained from encoding the plurality of information bits, wherein the successive sub-blocks are differently precoded using different precoding schemes having a code rate equal to 1, the method comprising the following steps of:

receiving sequence control information from a remote transmitter, the sequence control information indicating the number L of sub-sets of channel output symbols;
assigning L successive groups of channel output symbols to L successive sub-sets of channel output symbols;
differently re-processing the number L of successive sub-sets of channel output symbols by differently demodulating the successive sub-sets of channel output symbols to obtain L successive re-processed sub-blocks k of length $m_k$ by obtaining, within each sub-set k of channel output symbols, different number $m_k$ of bits per channel output symbol; and
decoding the successive re-processed sub-blocks to obtain the plurality of information bits,

**characterized in that** the step of differently reprocessing further comprises demodulated differently de-precoding the successive sub-blocks using different de-precoding schemes to obtain successive de-precoded sub-blocks as the successive re-processed sub-blocks using different de-precoding schemes having a code rate equal to 1.

**22.** Computer program having a program code for performing the method in accordance with claim 20 or the method in accordance with claim 21, when the program runs on a computer.

**Patentansprüche**

**1.** Vorrichtung zum Bereitstellen eines Satzes von Kanaleingangssymbolen, wobei die Vorrichtung folgende Merkmale aufweist:

eine Verarbeitungseinheit (101) zum Codieren einer Mehrzahl von Informationsbits, wobei die Verarbeitungseinheit (101) zum Bereitstellen eines Codeblocks der Länge N wirksam ist;
eine Einrichtung (105) zum Bereitstellen von Kanalkapazitätsinformationen, die eine erzielbare Anzahl von Informationsbits pro Kanaleingangssymbol anzeigen;
eine Folgesteuerung (209) zum Unterteilen des Codeblocks in L aufeinander folgende Unterblöcke k, mit $k \in 1 \ldots L$, der Länge $\alpha_k N = m_k$ unter Verwendung der Kapazitätsinformationen, derart, dass jeder Unterblock k ein Verhältnis $\alpha_k \in [0,1]$ des Codeblocks abdeckt, und dass $\sum_{k=1}^{L} \alpha_k = 1$ und $\frac{1}{\sum_{k=1}^{L} \alpha_k / m_k} = m_{IR}$ gelten,
eine Einrichtung (103, 207) zum unterschiedlichen Verarbeiten der aufeinander folgenden Unterblöcke durch unterschiedliches Modulieren der aufeinander folgenden Unterblöcke, um den Satz von Kanaleingangssymbolen bereitzustellen, so dass innerhalb jedes Unterblocks k eine unterschiedliche Anzahl $m_k$ von Bits des jeweiligen Teilsatzes pro erhaltenem Kanaleingangssymbol verwendet wird,
und so dass die durchschnittliche Anzahl $m_{IR}$ von Informationsbits pro Kanaleingangssymbol näher an der erzielbaren Anzahl von Informationsbits pro Kanaleingangssymbol ist als eine Anzahl von Informationsbits pro Kanaleingangssymbol, die resultiert, wenn das gleiche Verarbeitungsschema auf die Anzahl aufeinander folgender Unterblöcke angewendet wird;

**dadurch gekennzeichnet, dass** die Einrichtung (103) zum unterschiedlichen Verarbeiten ferner eine Einrichtung (205) zum unterschiedlichen Vorcodieren der aufeinander folgenden Unterblöcke unter Verwendung unterschiedlicher Vorcodierungsschemata mit einer Coderate gleich 1 aufweist, um zu modulierende aufeinander folgende vorcodierte Unterblöcke zu erhalten, um den Satz der Kanaleingangssymbole zu erhalten.

**2.** Vorrichtung gemäß Anspruch 1, bei der die Einrichtung (207) zum unterschiedlichen Abbilden wirksam ist, um $m_k$ aufeinander folgende verarbeitete Bits eines Unterblocks k auf eine $2^{m_k}$-äre Signalraumkonstellation abzubilden.

**3.** Vorrichtung gemäß Anspruch 2, bei der die Einrichtung (207) zum unterschiedlichen Abbilden zum Verwenden eines Gray-Codes, eines QAM-Schemas, eines PSK-Schemas oder eines QPSK-Schemas wirksam ist.

4. Vorrichtung gemäß einem der Ansprüche 1 bis 3, bei der die unterschiedlichen Vorcodierungsschemata für jeden Unterblock rekursiv sind.

5. Vorrichtung gemäß einem der Ansprüche 1 bis 4, bei der die Einrichtung zum unterschiedlichen Modulieren zum Modulieren aufeinander folgender Unterblöcke auf unterschiedliche Signalraumkonstellationen unter Verwendung eines unterschiedlichen Modulationsschemas für jeden Unterblock wirksam sind, um die Kanaleingangssymbole zu erhalten.

6. Vorrichtung gemäß Anspruch 5, bei der die Einrichtung zum unterschiedlichen Modulieren wirksam ist, um $m_k$ aufeinander folgende Bits eines Unterblocks auf eine $2^{m_k}$-äre Signalraumkonstellation abzubilden, um die Kanaleingangssymbole bereitzustellen.

7. Vorrichtung gemäß Anspruch 6, bei der die Einrichtung zum unterschiedlichen Modulieren wirksam ist, um ein QAM- oder ein PSK- oder ein QPSK-Modulationsschema zu verwenden.

8. Vorrichtung gemäß einem der vorherigen Ansprüche, bei der die Verarbeitungseinheit (101) einen Codierer (201) mit einer Coderate von weniger als 1 zum Codieren der Mehrzahl von Informationsbits, um codierte Bits bereitzustellen, und eine Verschachtelungseinrichtung (203) zum Verschachteln der codierten Bits, um verschachtelte Bits bereitzustellen, die den Codeblock bilden, aufweist.

9. Vorrichtung gemäß Anspruch 8, bei der die Einrichtung zum unterschiedlichen Abbilden angepasst ist, um die verschachtelten Bits auf die unterschiedliche Signalraumkonstellation abzubilden, um Signalraumkonstellationswerte bereitzustellen.

10. Vorrichtung zum Bereitstellen einer Mehrzahl von Informationsbits aus einem Satz von Kanalausgangssymbolen, die aus einem Übertragen eines Satzes von Kanaleingangssymbolen durch einen Kommunikationskanal resultieren, wobei der Satz von Kanaleingangssymbolen eine Anzahl L aufeinander folgender Untersätze von Kanaleingangssymbolen aufweist, wobei die Anzahl L aufeinander folgender Untersätze von Kanaleingangssymbolen aus einem unterschiedlichen Verarbeiten von L aufeinander folgenden Unterblöcken k, mit $k \in 1 \ldots L$, der Länge $\alpha_k N = m_k$ aus einem Codeblock der Länge N, mit $\alpha k \in [0,1]$, und $\sum_{k=1}^{L} \alpha_k = 1$ erhalten wird, und wobei innerhalb jedes Unterblocks k eine unterschiedliche Anzahl $m_k$ von Bits des jeweiligen Untersatzes pro erhaltenem Kanaleingangssymbol verwendet wird, mit $\frac{1}{\sum_{k=1}^{L} \alpha_k / m_k} = m_{IR}$, wobei der Codeblock aus einem Codieren der Mehrzahl von Informationsbits erhalten wird, wobei die aufeinander folgenden Unterblöcke unter Verwendung unterschiedlicher Vorcodierungsschemata mit einer Coderate gleich 1 unterschiedlich vorcodiert sind, wobei die Vorrichtung folgende Merkmale aufweist:

eine Folgesteuerung, die zum Empfangen von Folgesteuerinformationen von einem entfernten Sender konfiguriert ist, wobei die Folgesteuerinformationen die Anzahl L von Untersätzen von Kanalausgangssymbolen anzeigen, sowie zum Zuweisen von L aufeinander folgenden Gruppen von Kanalausgangssymbolen zu L aufeinander folgenden Untersätzen von Kanalausgangssymbolen;
eine Einrichtung (301, 403) zum unterschiedlichen Rückverarbeiten der Anzahl L aufeinander folgender Untersätze von Kanalausgangssymbolen durch unterschiedliches Demodulieren der aufeinander folgenden Untersätze von Kanalausgangssymbolen, um L aufeinander folgende rückverarbeitete Unterblöcke k der Länge $m_k$ zu erhalten, indem innerhalb jedes Untersatzes k von Kanalausgangssymbolen eine unterschiedliche Anzahl $m_k$ von Bits pro Kanalausgangssymbol erhalten wird; und
eine Rückverarbeitungseinheit (303, 411) zum Decodieren der aufeinander folgenden rückverarbeiteten Unterblöcke, um die Mehrzahl von Informationsbits zu erhalten, **dadurch gekennzeichnet, dass**
die Einrichtung (301) zum unterschiedlichen Rückverarbeiten ferner eine Einrichtung (405) zum unterschiedlichen Entvorcodieren der aufeinander folgenden demodulierten Unterblöcke unter Verwendung unterschiedlicher Entvorcodierungsschemata, um aufeinander folgende entvorcodierte Unterblöcke als die aufeinander folgenden rückverarbeiteten Unterblöcke zu erhalten, unter Verwendung unterschiedlicher Entvorcodierungsschemata mit einer Coderate gleich 1 aufweist.

**11.** Vorrichtung gemäß Anspruch 10, bei der die Einrichtung (301) zum unterschiedlichen Rückverarbeiten die Einrichtung zum unterschiedlichen Demodulieren aufweist, wobei die Einrichtung zum unterschiedlichen Demodulieren zum Demodulieren eines Untersatzes von Kanalausgangssymbolen unter Verwendung eines QAM-Demodulationsschemas, eines QPSK-Demodulationsschemas oder eines PSK-Demodulationsschemas wirksam ist, um einen rückverarbeiteten Unterblock des Satzes aufeinander folgender rückverarbeiteter Unterblöcke bereitzustellen.

**12.** Vorrichtung gemäß Anspruch 10 oder 11, bei der die Einrichtung (403) zum unterschiedlichen Rückabbilden zum unterschiedlichen Rückabbilden der Untersätze von Kanalausgangssymbolen unter Verwendung unterschiedlicher $2^m$-ärer Rückabbildungsschemata wirksam ist, um die aufeinander folgenden rückverarbeiteten Unterblöcke zu erhalten.

**13.** Vorrichtung gemäß Anspruch 12, bei der die Rückabbildungsschemata zu einem Gray-Decodierungsschema, zu einem QAM-Rückabbildungsschema, zu einem QPSK-Rückabbildungsschema oder zu einem PSK-Rückabbildungsschema gehören.

**14.** Vorrichtung gemäß einem der Ansprüche 10 bis 13, bei der die Einrichtung zum Entvorcodieren ein Kriterium eines maximalen Aposteriori oder einer maximalen Wahrscheinlichkeit zum Entvorcodieren verwendet.

**15.** Vorrichtung gemäß einem der Ansprüche 10 bis 14, bei der die Rückverarbeitungseinheit (303) eine Entschachtelungseinrichtung zum Entschachteln des Satzes rückverarbeiteter Blöcke, um die verschachtelten Werte zu erhalten, und einen Decodierer zum Decodieren der entschachtelten Werte, um die Mehrzahl von Informationsbits zu erhalten, aufweist.

**16.** Vorrichtung gemäß Anspruch 15, bei der der Decodierer wirksam ist, um weiche Ausgangswerte zu bestimmen, die den entschachtelten Werten zugeordnet sind.

**17.** Vorrichtung gemäß Anspruch 16, bei der der Decodierer mit der Einrichtung zum unterschiedlichen Entvorcodieren oder mit der Einrichtung zum unterschiedlichen Rückabbilden zum iterativen Reduzieren eines Demodulationsfehlers oder eines Rückabbildungsfehlers gekoppelt ist.

**18.** Vorrichtung gemäß einem der Ansprüche 10 bis 17, bei der die Einrichtung (405) zum unterschiedlichen Entvorcodieren zum iterativen Entvorcodieren der aufeinander folgenden Unterblöcke wirksam ist, wobei die Rückverarbeitungseinheit (303) eine Entschachtelungseinrichtung zum Bereitstellen entschachtelter Werte und einen Decodierer zum Decodieren der entschachtelten Werte aufweist, wobei der Decodierer wirksam ist, um weiche Ausgangswerte, die den entschachtelten Werten zugeordnet sind, zu bestimmen, und wobei der Decodierer mit der Einrichtung (405) zum unterschiedlichen Entvorcodieren zum iterativen Reduzieren eines Entvorcodierungsfehlers gekoppelt ist.

**19.** Vorrichtung gemäß einem der Ansprüche 10 bis 18, die ferner eine Verarbeitungsteuerung aufweist, die zum Bereitstellen von Informationen über ein Demodulationsschema, das einem aktuellen Untersatz von Kanalausgangssymbolen zugeordnet ist, an die Einrichtung zum unterschiedlichen Demodulieren und zum Bereitstellen von Informationen über ein Rückabbildungsschema, das dem aktuellen Untersatz von Kanalausgangssymbolen zugeordnet ist, an die Einrichtung zum unterschiedlichen Rückabbilden wirksam ist.

**20.** Verfahren zum Bereitstellen eines Satzes von Kanaleingangssymbolen, wobei das Verfahren die folgenden Schritte aufweist:

Codieren einer Mehrzahl von Informationsbits, um einen Codeblock der Länge N bereitzustellen;
Unterteilen des Codeblocks in L aufeinander folgende Unterblöcke k, mit $k \in 1 \ldots L$, der Länge $\alpha_k N = m_k$ unter Verwendung der Kapazitätsinformationen, derart, dass jeder Unterblock k ein Verhältnis $\alpha_k \in [0,1]$ des Codeblocks abdeckt, und dass $\sum_{k=1}^{L} \alpha_k = 1$ und $\frac{1}{\sum_{k=1}^{L} \alpha_k / m_k} = m_{IR}$ gelten,

unterschiedliches Verarbeiten der aufeinander folgenden Unterblöcke durch unterschiedliches Modulieren der aufeinander folgenden Unterblöcke, um den Satz von Kanaleingangssymbolen bereitzustellen, so dass innerhalb jedes Unterblocks k eine unterschiedliche Anzahl $m_k$ von Bits des jeweiligen Untersatzes pro erhaltenem Kanaleingangssymbol verwendet wird,

und so dass die durchschnittliche Anzahl $m_{IR}$ von Informationsbits pro Kanaleingangssymbol näher an der erzielbaren Anzahl von Informationsbits pro Kanaleingangssymbol ist als eine Anzahl von Informationsbits pro Kanaleingangssymbol, die resultiert, wenn das gleiche Verarbeitungsschema auf die Anzahl aufeinander folgender Unterblöcke angewendet wird;
Bereitstellen von Kanalkapazitätsinformationen, die eine erzielbare Anzahl von Informationsbits pro Kanaleingangssymbol anzeigen;

**dadurch gekennzeichnet, dass** der Schritt des unterschiedlichen Verarbeitens ferner, unter Verwendung unterschiedlicher Vorcodierungsschemata mit einer Coderate gleich 1, ein unterschiedliches Vorcodieren der aufeinander folgenden Unterblöcke aufweist, um zu modulierende aufeinander folgende vorcodierte Unterblöcke zu erhalten, um den Satz der Kanaleingangssymbole zu erhalten, um eine Fehlerrate und eine Komplexität hinsichtlich der erforderlichen Anzahl von Decodierungsiterationen an der Empfängerseite anzupassen, um den Satz von Kanaleingangssymbolen zu erhalten.

**21.** Verfahren zum Bereitstellen einer Mehrzahl von Informationsbits aus einem Satz von Kanalausgangssymbolen, die aus einem Übertragen eines Satzes von Kanaleingangssymbolen durch, einen Kommunikationskanal resultieren, wobei der Satz von Kanaleingangssymbolen eine Anzahl L aufeinander folgender Untersätze von Kanaleingangssymbolen aufweist, wobei die Anzahl L aufeinander folgender Untersätze von Kanaleingangssymbolen aus einem unterschiedlichen Verarbeiten von L aufeinander folgenden Unterblöcken k, mit $k \in 1 \ldots L$, der Länge $\alpha_k N = m_k$ aus einem Codeblock der Länge N, mit $\alpha_k \in [0,1]$ und $\sum_{k=1}^{L} \alpha_k = 1$, erhalten wird, und wobei innerhalb jedes Unterblocks k eine unterschiedliche Anzahl $m_k$ von Bits des jeweiligen Untersatzes pro erhaltenem Kanaleingangssymbol verwendet wird, mit $\frac{1}{\sum_{k=1}^{L} \alpha_k / m_k} = m_{IR}$, wobei der Codeblock aus einem Codieren der Mehrzahl von Informationsbits erhalten wird, wobei die aufeinander folgenden Unterblöcke unter Verwendung unterschiedlicher Vorcodierungsschemata mit einer Coderate gleich 1 unterschiedlich vorcodiert werden, wobei das Verfahren die folgenden Schritte aufweist:

Empfangen von Folgesteuerinformationen von einem entfernten Sender, wobei die Folgesteuerinformationen die Anzahl L von Untersätzen von Kanalausgangssymbolen anzeigen;
Zuweisen von L aufeinander folgenden Gruppen von Kanalausgangssymbolen zu L aufeinander folgenden Untersätzen von Kanalausgangssymbolen;
unterschiedliches Rückverarbeiten der Anzahl L aufeinander folgender Untersätze von Kanalausgangssymbolen durch unterschiedliches Demodulieren der aufeinander folgenden Untersätze von Kanalausgangssymbolen, um L aufeinander folgende rückverarbeitete Unterblöcke k der Länge $m_k$ zu erhalten, indem innerhalb jedes Untersatzes k von Kanalausgangssymbolen eine unterschiedliche Anzahl $m_k$ von Bits pro Kanalausgangssymbol erhalten wird; und
Decodieren der aufeinander folgenden rückverarbeiteten Unterblöcke, um die Mehrzahl von Informationsbits zu erhalten,

**dadurch gekennzeichnet, dass** der Schritt des unterschiedlichen Rückverarbeitens ferner ein unterschiedliches Entvorcodieren der aufeinander folgenden demodulierten Unterblöcke unter Verwendung unterschiedlicher Entvorcodierungsschemata, um aufeinander folgende entvorcodierte Unterblöcke als die aufeinander folgenden rückverarbeiteten Unterblöcke zu erhalten, unter Verwendung unterschiedlicher Entvorcodierungsschemata mit einer Coderate gleich 1 aufweist.

**22.** Computerprogramm mit einem Programmcode zum Durchführen des Verfahrens gemäß Anspruch 20 oder des Verfahrens gemäß Anspruch 21, wenn das Programm auf einem Computer läuft.

## Revendications

**1.** Appareil permettant de fournir un ensemble de symboles d'entrée de canal, l'appareil comprenant:

une unité de traitement (101) destinée à coder une pluralité de bits de données, l'unité de traitement (101) étant opérationnelle pour fournir un bloc de code de longueur N;
un moyen (105) destiné à fournir des informations de capacité de canal indiquant un nombre de bits de données pouvant être atteint par symbole d'entrée de canal;
un contrôleur de séquence (209) destiné, à l'aide des informations de capacité, à diviser le bloc de code en L sous-blocs k successifs, avec $k \in 1...L$, de longueur $\alpha_k N = m_k$, de sorte que chaque sous-bloc k couvre un rapport

$\alpha_k \in [0, 1]$ du bloc de code et que $\sum_{k=1}^{L} \alpha_k = 1$, et $\frac{1}{\sum_{k=1}^{L} \alpha_k / m_k} = m_{IR}$ ,

un moyen (103, 207) destiné à traiter différemment les sous-blocs k successifs en modulant différemment les sous-blocs successifs de manière à fournir l'ensemble de symboles d'entrée de canal, de sorte que dans chaque sous-bloc k soit utilisé un nombre $m_k$ différent de bits du sous-ensemble respectif par symbole d'entrée de canal obtenu,
et que le nombre moyen $m_{IR}$ de bits de données par symbole d'entrée de canal soit plus proche du nombre de bits de données pouvant être atteint par symbole d'entrée de canal qu'un nombre de bits de données par symbole d'entrée de canal résultant lors de l'application du même schéma de traitement au nombre de sous-blocs successifs;

**caractérisé par le fait que** le moyen (103) destiné à traiter différemment comprend par ailleurs un moyen (205) destiné à précoder différemment, à l'aide de différents schémas de précodage présentant un taux de code égal à 1, les sous-blocs successifs, pour obtenir des sous-blocs précodés successifs à moduler pour obtenir l'ensemble de symboles d'entrée de canal.

**2.** Appareil selon la revendication 2, dans lequel le moyen (207) destiné à effectuer un mappage différemment est opérationnel pour effectuer le mappage de $m_k$ bits traités successifs d'un sous-bloc k selon une constellation d'espace de signal $2^{mk}$-aire.

**3.** Appareil selon la revendication 2, dans lequel le moyen (207) destiné à effectuer un mappage différemment est opérationnel pour utiliser un code de Gray, un schéma QAM, un schéma PSK ou un schéma QPSK.

**4.** Appareil selon l'une quelconque des revendications 1 à 3, dans lequel les différents schémas de précodage sont récursifs pour chaque sous-bloc.

**5.** Appareil selon l'une quelconque des revendications 1 à 4, dans lequel le moyen destiné à moduler différemment est opérationnel pour moduler des sous-blocs successifs sur différentes constellations d'espace de signal à l'aide d'un schéma de modulation différent pour le chaque sous-bloc, pour obtenir les symboles d'entrée de canal.

**6.** Appareil selon la revendication 5, dans lequel le moyen destiné à moduler différemment est opérationnel pour effectuer le mappage de $m_k$ bits successifs d'un sous-bloc à une constellation d'espace de signal $2^{mk}$-aire, pour fournir les symboles d'entrée de canal.

**7.** Appareil selon la revendication 6, dans lequel le moyen destiné à moduler différemment est opérationnel pour utiliser un schéma de modulation QAM ou PSK ou QPSK.

**8.** Appareil selon l'une quelconque des revendications précédentes, dans lequel l'unité de traitement (101) comprend un codeur (201) ayant un taux de code inférieur à 1 pour coder la pluralité de bits de données, pour fournir des bits codés, et un moyen d'entremêlement (203) destiné à entremêler les bits codés, pour fournir des bits entremêlés formant le bloc de code.

**9.** Appareil selon la revendication 8, dans lequel le destiné à effectuer le mappage différemment convient pour effectuer le mappage des bits entremêlés sur la constellation d'espace de signal différente, pour fournir des valeurs de constellation d'espace de signal.

**10.** Appareil permettant de fournir une pluralité de bits de données d'un ensemble de symboles de sortie de canal résultant de la transmission d'un ensemble de symboles d'entrée de canal par un canal de transmission, dans lequel l'ensemble de symboles d'entrée de canal comprend un nombre L de sous-ensembles successifs de symboles d'entrée de canal, le nombre L de sous-ensembles successifs de symboles d'entrée de canal étant obtenu en traitant différemment L sous-blocs k successifs, avec $k \in 1...L$, de longueur $\alpha_k N = m_k$ à partir d'un bloc de code de

longueur N, avec $\alpha_k \in [0, 1]$ et $\sum_{k=1}^{L} \alpha_k = 1$, et avec, dans chaque bloc de code k, un nombre $m_k$ différent de bits du sous-ensemble respectif étant utilisé par symbole d'entrée de canal obtenu, avec $\frac{1}{\sum_{k=1}^{L} \alpha_k / m_k} = m_{IR}$, le bloc de code étant obtenu par le codage de la pluralité de bits de données, dans lequel les sous-blocs successifs sont précodés différemment à l'aide de schémas de précodage différents ayant un taux de code égal à 1, l'appareil comprenant:

un contrôleur de séquence configuré de manière à recevoir des données de commande séquence d'un émetteur à distance, les données de commande de séquence indiquant le nombre L de sous-ensembles de symboles d'entrée de canal et à attribuer L groupes successifs de symboles de sortie de canal à L sous-ensembles successifs de symboles de sortie de canal;
un moyen (301, 403) destiné à retraiter différemment le nombre L de sous-ensembles successifs de symboles de sortie de canal en démodulant différemment les sous-ensembles successifs de symboles de sortie de canal, pour obtenir L sous-blocs k retraités successifs de longueur $m_k$ en obtenant, dans chaque sous-ensemble k de symboles de sortie de canal, le nombre $m_k$ de bits différent par symbole de sortie de canal; et
une unité de retraitement (303, 411) destinée à décoder les sous-blocs retraités successifs, pour obtenir la pluralité de bits de données, **caractérisé par le fait que**
le moyen (301) destiné à retraiter différemment comprend par ailleurs un moyen (405) destiné à défaire le précodage différent des sous-blocs démodulés successifs à l'aide de schémas de précodage différents, pour obtenir des sous-blocs à précodage annulé successifs comme sous-blocs retraités successifs à l'aide de différents schémas d'annulation de précodage ayant un taux de code égal à 1.

**11.** Appareil selon la revendication 10, dans lequel le moyen (301) destiné à retraiter différemment comprend un moyen destiné à démoduler différemment, dans lequel le moyen destiné à démoduler différemment est opérationnel pour démoduler un sous-ensemble de symboles de sortie de canal à l'aide d'un schéma de démodulation QAM, d'un schéma de démodulation QPSK, ou d'un schéma de démodulation PSK, pour fournir un sous-bloc retraité de l'ensemble de sous-blocs retraités successifs.

**12.** Appareil selon la revendication 10 ou 11, dans lequel le moyen (403) destiné à effectuer différemment un mappage est opérationnel pour effectuer différemment un mappage des sous-ensembles de symboles de sortie de canal à l'aide de schémas de démappage $2^m$-aire différent, pour obtenir les sous-blocs retraités successifs.

**13.** Appareil selon la revendication 12, dans lequel les schémas de démappage appartiennent à un schéma de décodage de Gray, à un schéma de démappage QAM, à un schéma de démappage QPSK ou à un schéma de démappage PSK.

**14.** Appareil selon l'une quelconque des revendications 10 à 13, dans lequel le moyen destiné à défaire le précodage utilise un maximum a posteriori ou un critère de probabilité maximale pour l'annulation du précodage.

**15.** Appareil selon l'une quelconque des revendications 10 à 14, dans lequel l'unité de retraitement (303) comprend un moyen de démêlement destiné à démêler l'ensemble de blocs retraités, pour obtenir les valeurs entremêlées, et un décodeur destiné à décoder les valeurs démêlées, pour obtenir la pluralité de bits de données.

**16.** Appareil selon la revendication 15, dans lequel le décodeur est opérationnel pour déterminer des valeurs de sortie douces associées aux valeurs démêlées.

**17.** Appareil selon la revendication 16, dans lequel le décodeur est couplé au moyen destiné à défaire le précodage différent ou au moyen destiné à effectuer différemment le démappage, pour réduire de manière itérative une erreur de démodulation ou une erreur de démappage.

**18.** Appareil selon l'une quelconque des revendications 10 à 17, dans lequel le moyen (405) destiné à défaire le précodage différent est opérationnel pour défaire de manière itérative le précodage des sous-blocs successifs, dans lequel l'unité de retraitement (303) comprend un moyen de démêlement destiné à fournir des valeurs démêlées, et un décodeur destiné à décoder les valeurs démêlées, dans lequel le décodeur est opérationnel pour déterminer des valeurs de sortie douces associées aux valeurs démêlées, et dans lequel le décodeur est couplé au moyen (405) destiné à défaire le précodage différent, pour réduire de manière itérative une erreur d'annulation de précodage.

**19.** Appareil selon l'une quelconque des revendications 10 à 18, comprenant par ailleurs un contrôleur de traitement qui est opérationnel pour fournir au moyen destiné à démoduler différemment des informations sur un schéma de démodulation associé à un sous-ensemble actuel de symboles de sortie de canal et pour fournir au moyen destiné à effectuer différemment le démappage des informations sur un schéma de démappage associé au sous-ensemble actuel de symboles de sortie de canal.

**20.** Procédé permettant de fournir un ensemble de symboles d'entrée de canal, le procédé comprenant les étapes suivantes consistant à:

coder une pluralité de bits de données, pour fournir un bloc de code de longueur N;
à l'aide des informations de capacité, diviser le bloc de code en L sous-blocs k successifs, avec $k \in 1...L$, de longueur $\alpha_k N = m_k$, de sorte que chaque sous-bloc k couvre un rapport $\alpha_k \in [0, 1]$ du bloc de code et que $\sum_{k=1}^{L} \alpha_k = 1$, et $\frac{1}{\sum_{k=1}^{L} \alpha_k / m_k} = m_{IR}$ ,
traiter différemment les sous-blocs successifs en modulant différemment les sous-blocs successifs, pour fournir l'ensemble de symboles d'entrée de canal de sorte que, dans chaque sous-bloc k, un nombre $m_k$ différent de bits du sous-ensemble respectif soit utilisé par symbole d'entrée de canal obtenu, et que le nombre moyen $m_{IR}$ de bits de données par symbole d'entrée de canal soit plus proche du nombre de bits de données pouvant être atteint par symbole d'entrée de canal qu'un nombre de bits de données par symbole d'entrée de canal résultant lors de l'application du même schéma de traitement au nombre de sous-blocs successifs;
fournir des informations de capacité de canal indiquant un nombre de bits de données pouvant être atteint par symbole d'entrée de canal;

**caractérisé par le fait que** l'étape consistant à traiter différemment comprend par ailleurs le fait de précoder différemment, à l'aide de schémas de précodage différents ayant un taux de code égal à 1, les sous-blocs successifs, pour obtenir des sous-blocs précodés successifs à moduler, pour obtenir l'ensemble des symboles d'entrée de canal, pour ajuster un taux d'erreur et une complexité en termes de nombre d'itérations de décodage requis du côté du récepteur pour obtenir l'ensemble de symboles d'entrée de canal.

**21.** Procédé permettant de fournir une pluralité de bits de données à partir d'un ensemble de symboles de sortie de canal résultant de la transmission d'un ensemble de symboles d'entrée de canal par un canal de transmission, dans lequel l'ensemble de symboles d'entrée de canal comprend un nombre L de sous-ensembles successifs de symboles d'entrée de canal, le nombre L de sous-ensembles successifs de symboles d'entrée de canal étant obtenu en traitant différemment L sous-blocs k successifs, avec $k \in 1 ... L$, de longueur $\alpha_k N = m_k$, 1... L, d'un bloc de code de la longueur N, avec $\alpha_k \in [0, 1]$ et $\sum_{k=1}^{L} \alpha_k = 1$, et avec, dans chaque bloc de code k, un nombre $m_k$ différent de bits du sous-ensemble respectif étant utilisé par symbole d'entrée de canal obtenu, avec $\frac{1}{\sum_{k=1}^{L} \alpha_k / m_k} = m_{IR}$ , le bloc de code étant obtenu par le codage de la pluralité de bits de données, dans lequel les sous-blocs successifs sont précodés différemment à l'aide de schémas de précodage différents ayant un taux de code égal à 1, le procédé comprenant les étapes suivantes consistant à:

recevoir des données de commande séquence d'un émetteur à distance, les données de commande de séquence indiquant le nombre L de sous-ensembles de symboles de sortie de canal;
attribuer L groupes successifs de symboles de sortie de canal à L sous-ensembles successifs de symboles de sortie de canal;
retraiter différemment le nombre L de sous-ensembles successifs de symboles de sortie de canal en démodulant différemment les sous-ensembles successifs de symboles de sortie de canal, pour obtenir L sous-blocs k retraités successifs de longueur $m_k$ en obtenant, dans chaque sous-ensemble k de symboles de sortie de canal, un nombre $m_k$ différent de bits par symbole de sortie de canal; et
décoder les sous-blocs retraités successifs, pour obtenir la pluralité de bits de données,

**caractérisé par le fait que** l'étape consistant à retraiter différemment comprend par ailleurs le fait de défaire le précodage différent des sous-blocs démodulés successifs à l'aide de schémas de précodage différents, pour obtenir des sous-blocs à annulation de précodage successifs comme sous-blocs retraités successifs à l'aide de différents schémas d'annulation de précodage ayant un taux de code égal à 1.

**22.** Programme d'ordinateur ayant un code de programme pour réaliser le procédé selon la revendication 20 ou le procédé selon la revendication 21 lorsque le programme est exécuté sur un ordinateur.

FIG 1

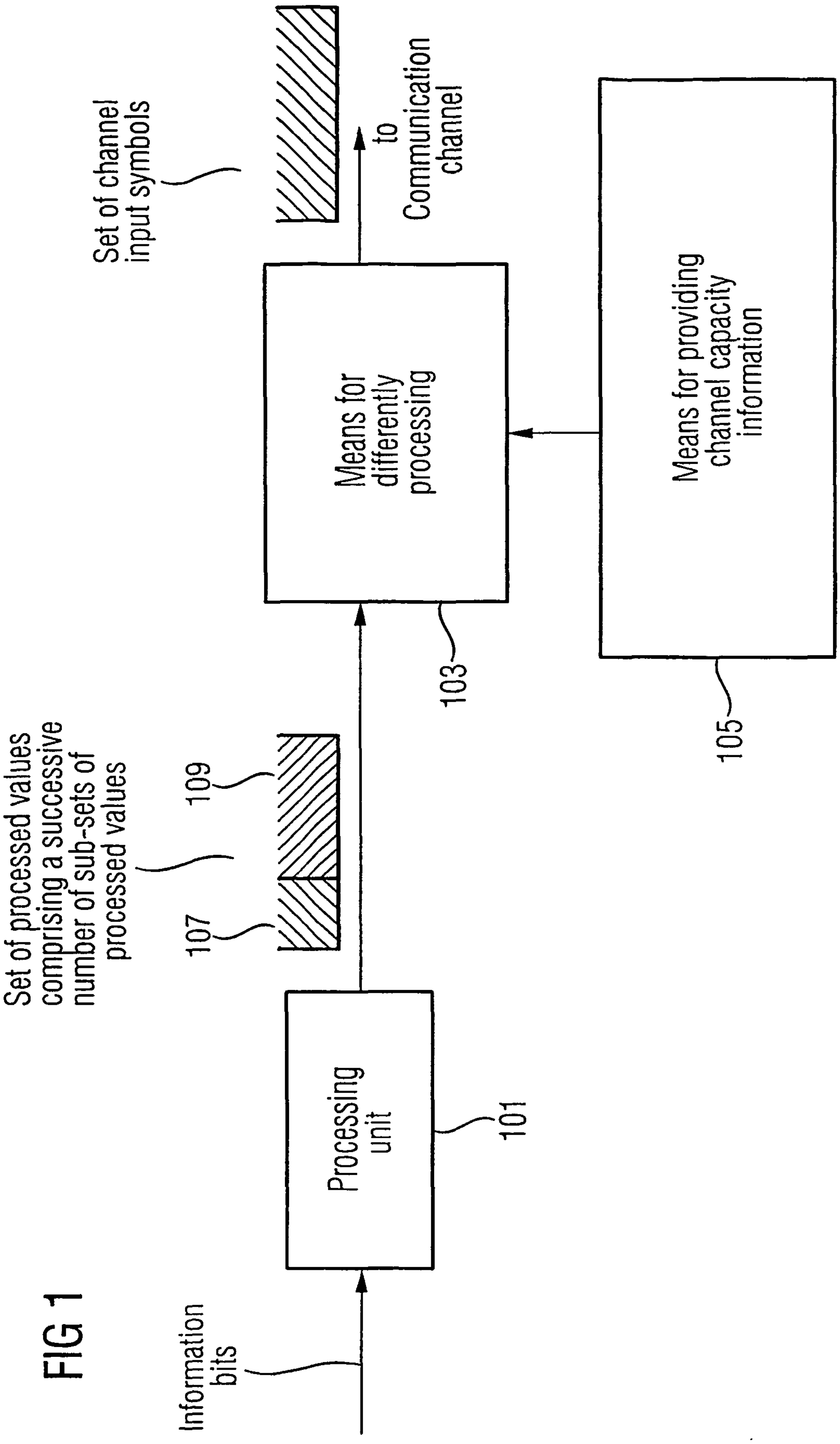
Information bits
Processing unit
101
Set of processed values comprising a successive number of sub-sets of processed values
107
109
Means for differently processing
103
Set of channel input symbols
to Communication channel
Means for providing channel capacity information
105

FIG 2

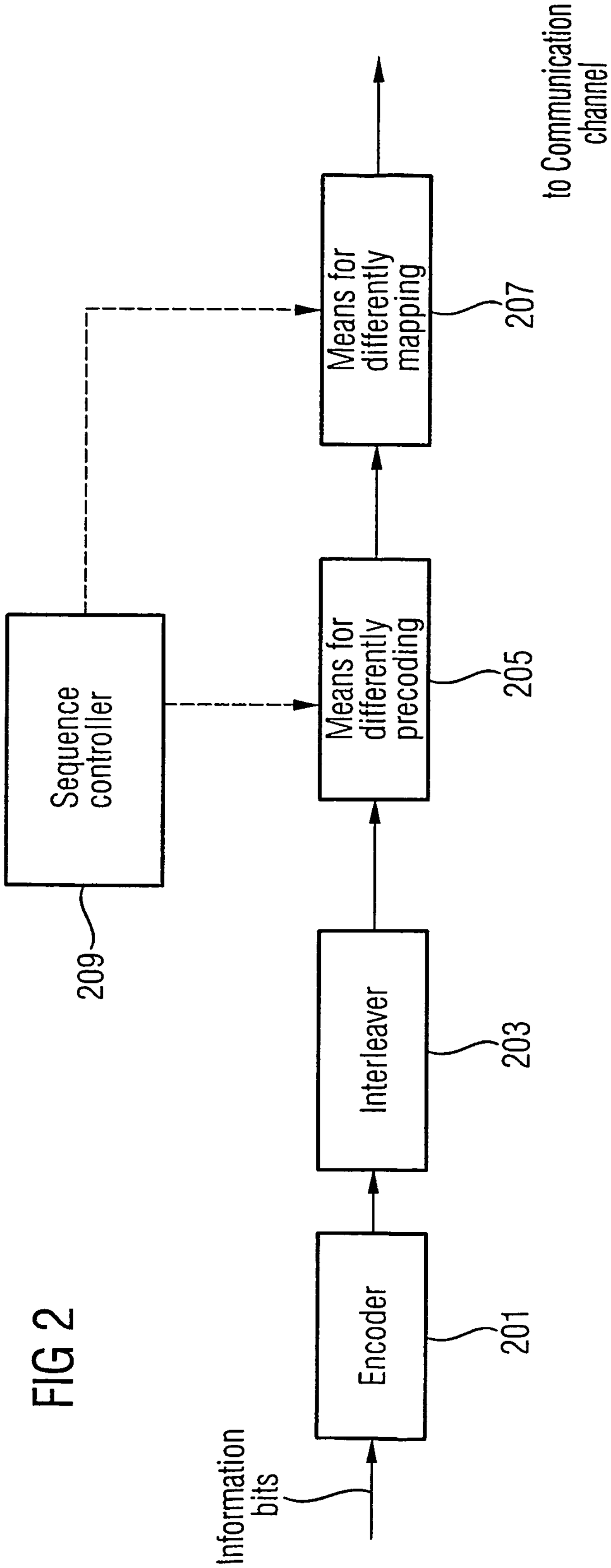
Information bits
Encoder
201
Interleaver
203
Means for differently precoding
205
Means for differently mapping
207
Sequence controller
209
to Communication channel

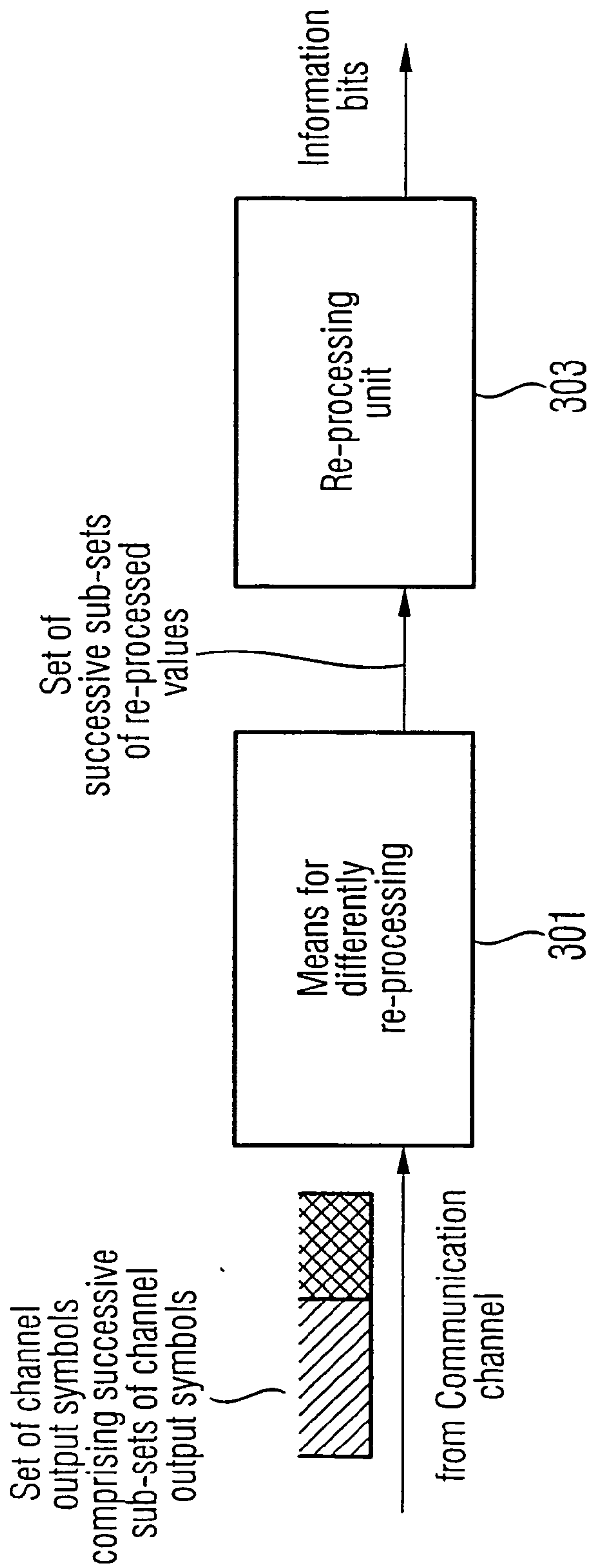
Information bits
Re-processing unit
303
Set of successive sub-sets of re-processed values
Means for differently re-processing
301
Set of channel output symbols comprising successive sub-sets of channel output symbols
from Communication channel

FIG 3

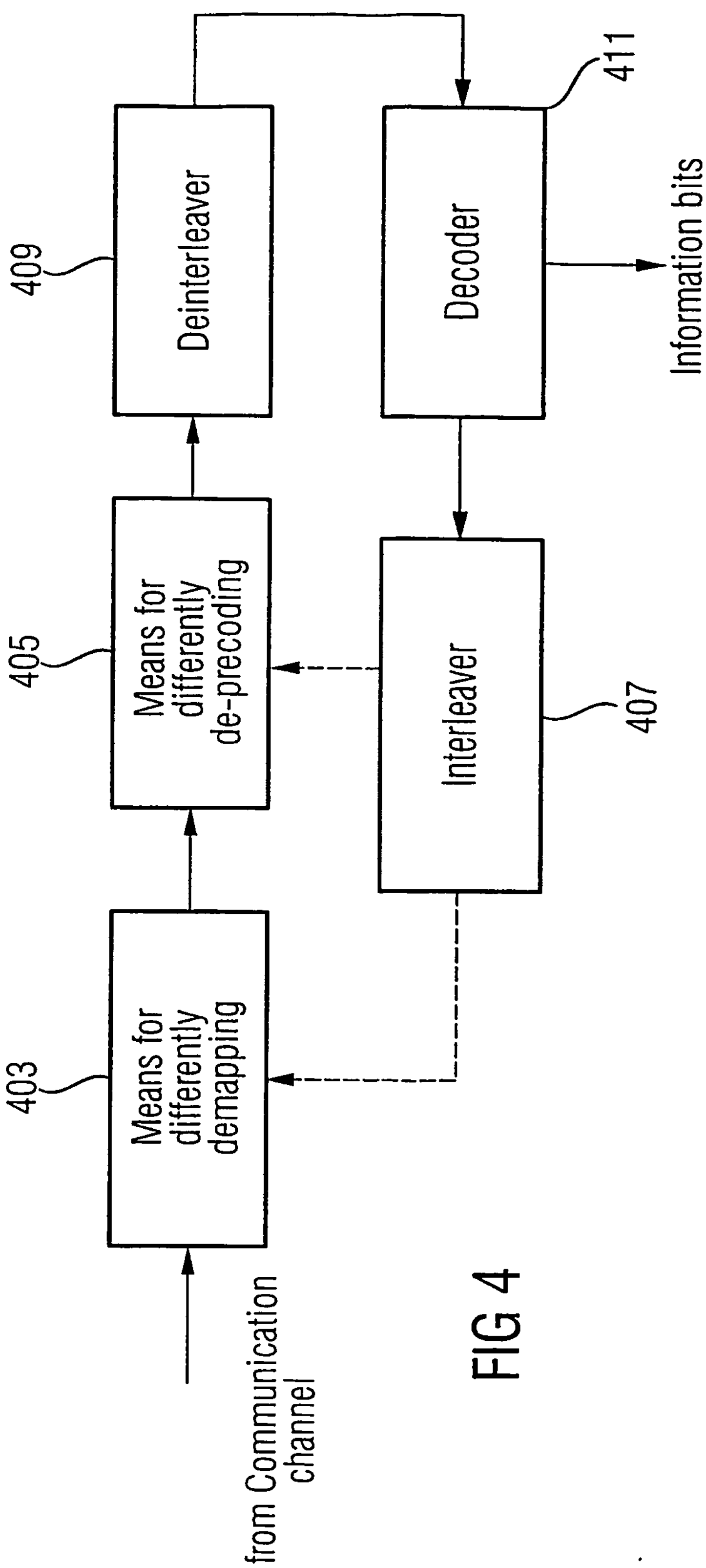
Means for differently demapping
403
Means for differently de-precoding
405
Deinterleaver
409
Decoder
411
Interleaver
407
from Communication channel
Information bits

FIG 4

FIG 5

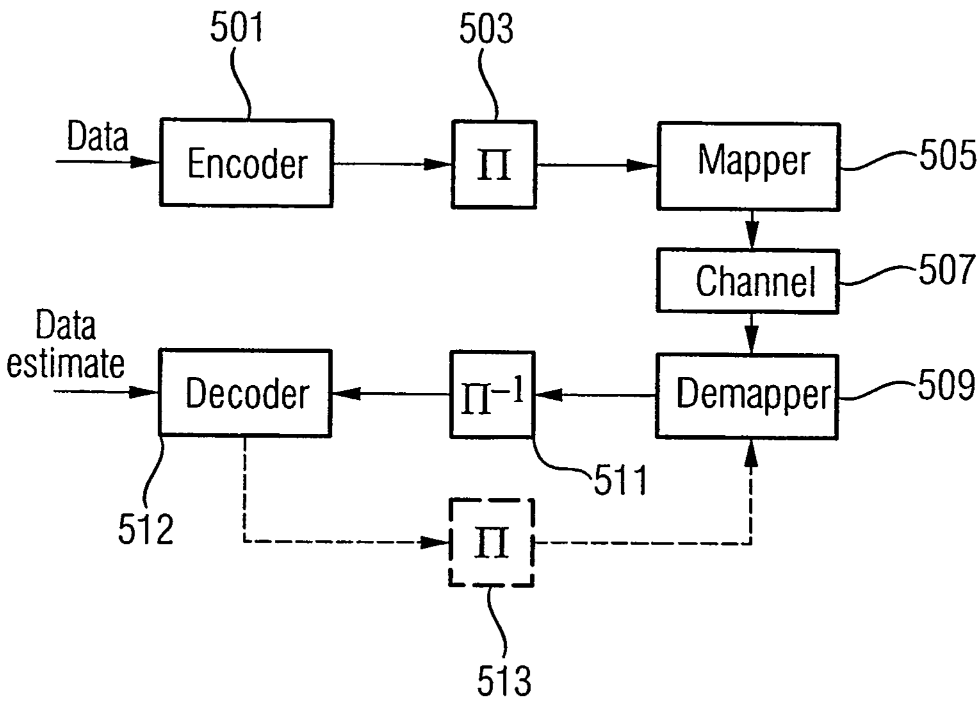
501
503
Data
Encoder
Π
Mapper
505
Channel
507
Data
estimate
Decoder
$\Pi^{-1}$
Demapper
509
511
512
Π
513

FIG 6

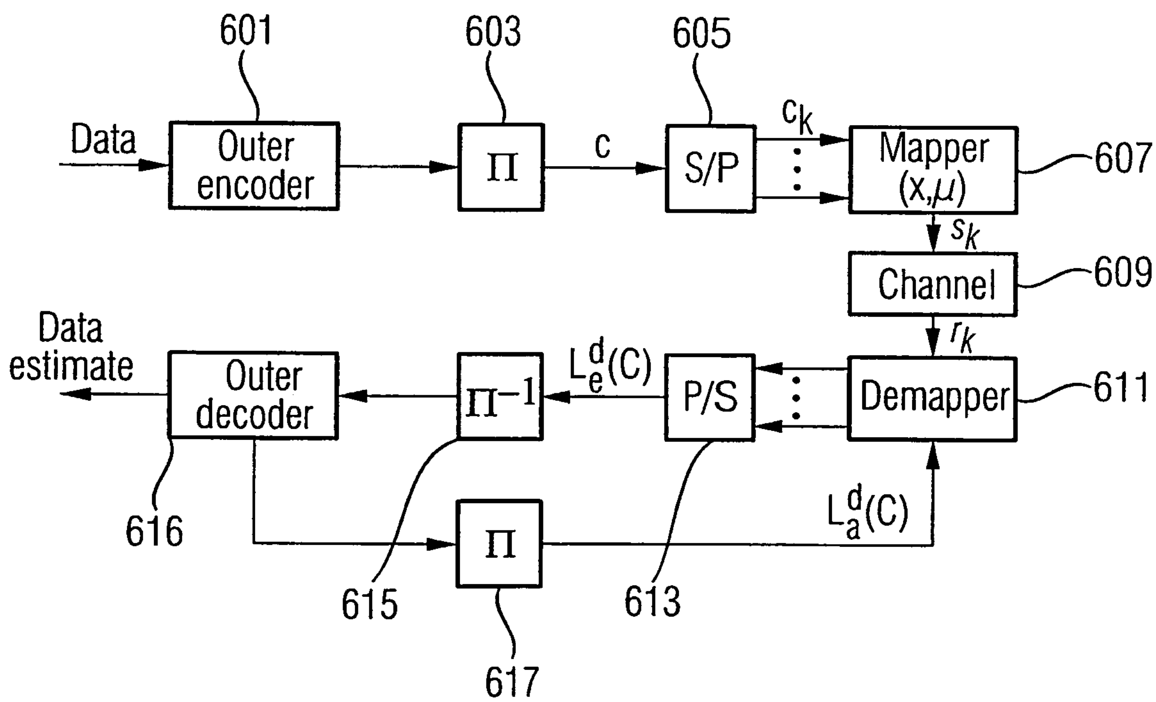
601
603
605
Data
Outer encoder
Π
c
S/P
$c_k$
Mapper (x,μ)
607
$s_k$
Channel
609
$r_k$
Data estimate
Outer decoder
$\Pi^{-1}$
$L_e^d(C)$
P/S
Demapper
611
616
Π
$L_a^d(C)$
615
613
617

FIG 7

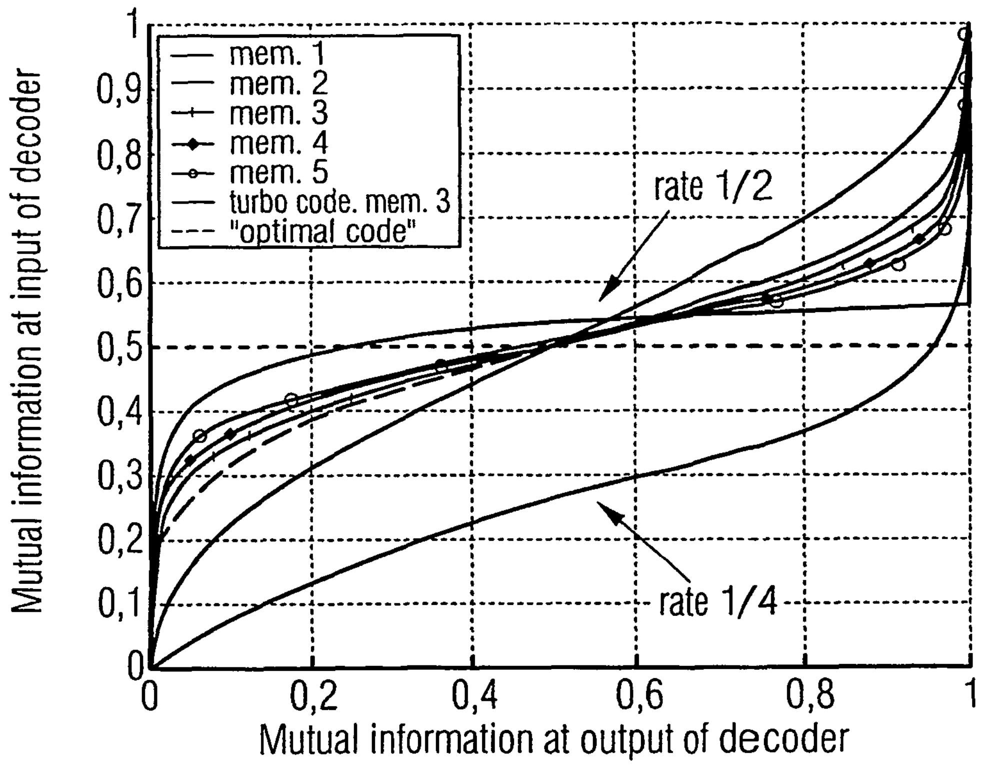
mem. 1
mem. 2
mem. 3
mem. 4
mem. 5
turbo code. mem. 3
"optimal code"
rate 1/2
rate 1/4
Mutual information at input of decoder
Mutual information at output of decoder
0
0,1
0,2
0,3
0,4
0,5
0,6
0,7
0,8
0,9
1
0
0,2
0,4
0,6
0,8
1

FIG 8

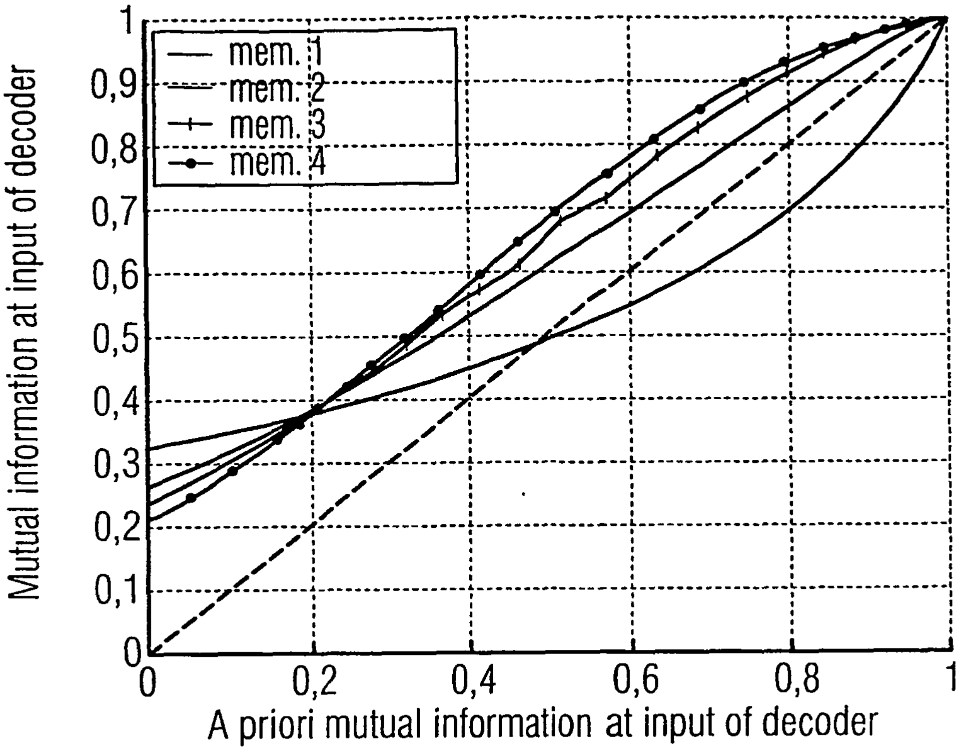


Transfer functions for parallel concatenated codes in the EXIT chart

FIG 9

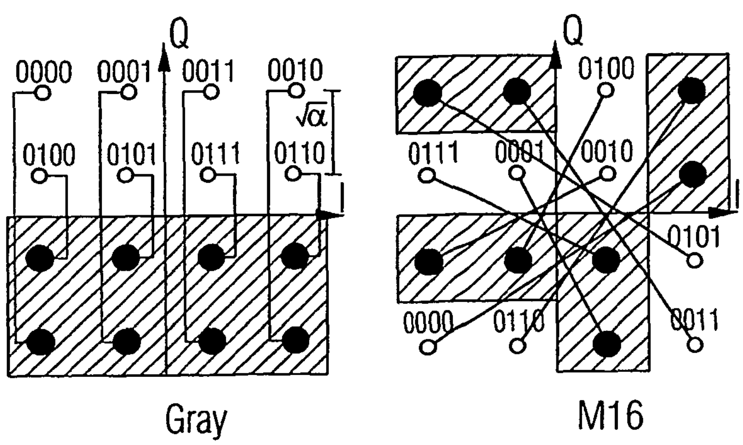


For bit i=1: 16-QAM mappings with decision regions without a priori information and binary signal constellations selected by the ideal a priori information of the last 3 bits

FIG 10

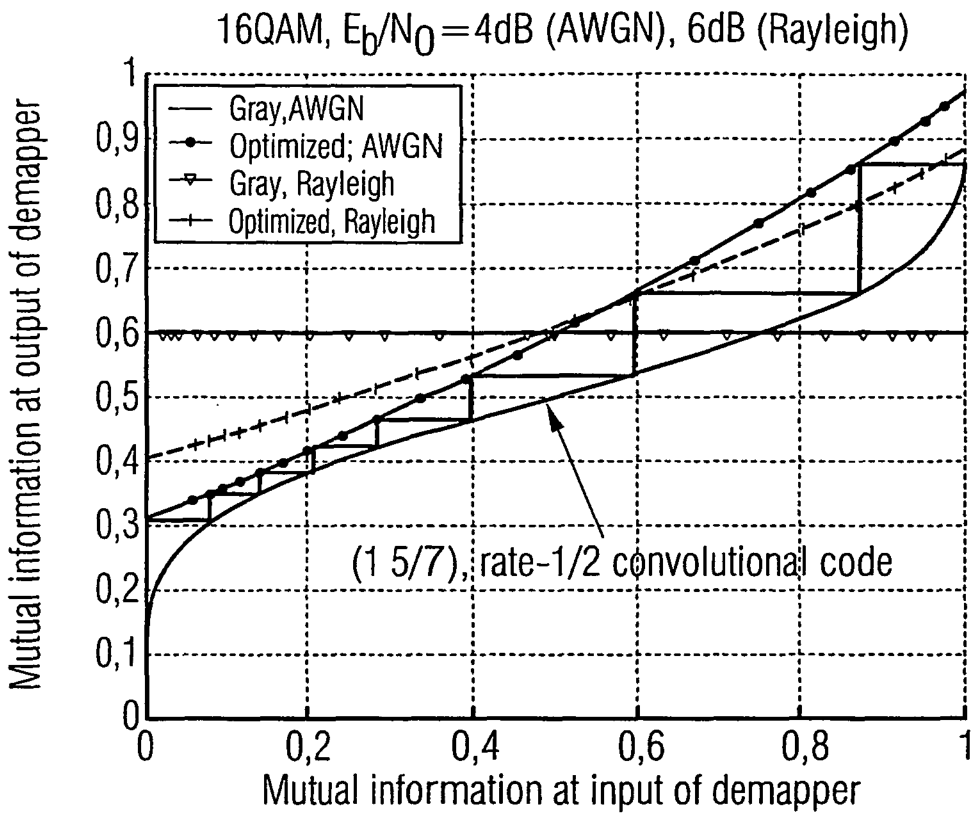


Transfer functions of different mappings in the EXIT chart

FIG 11

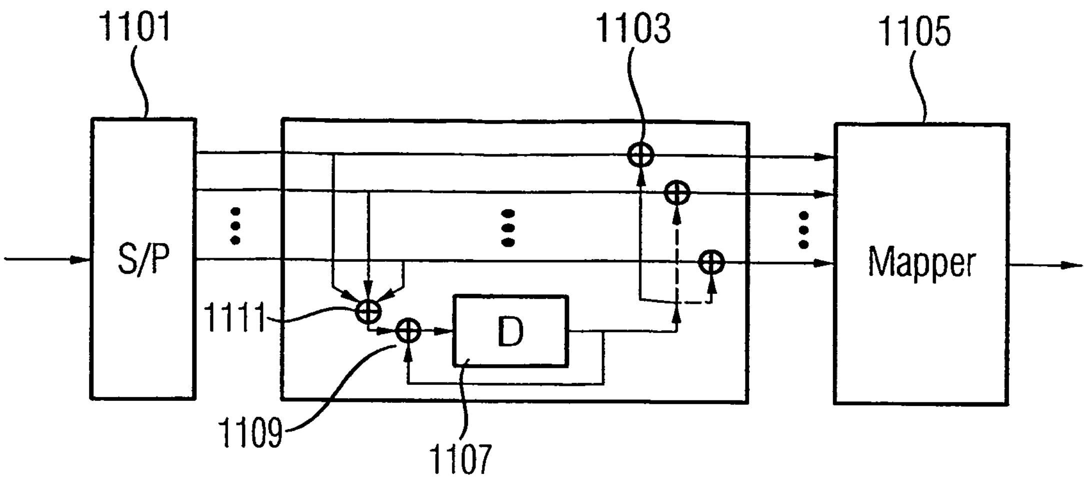


Parameter A=1, B=[1,1,...,1], D=$I_m$ and C as design

FIG 12

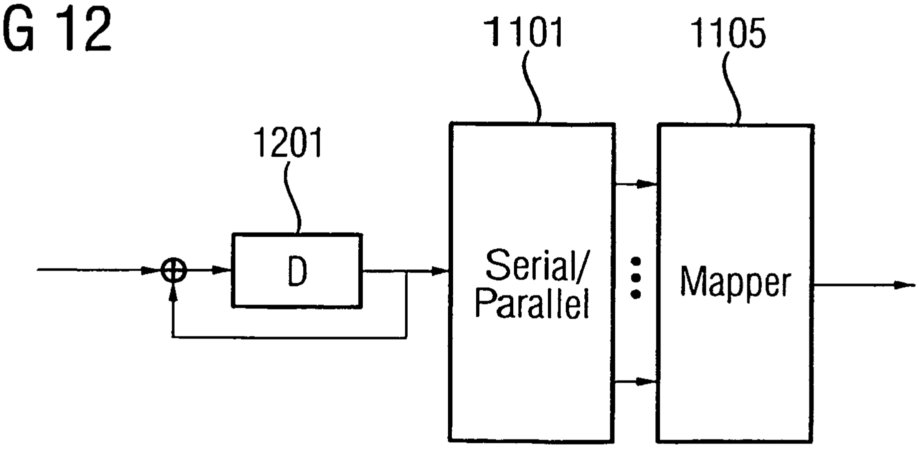


Predoder before demultiplexing

FIG 13

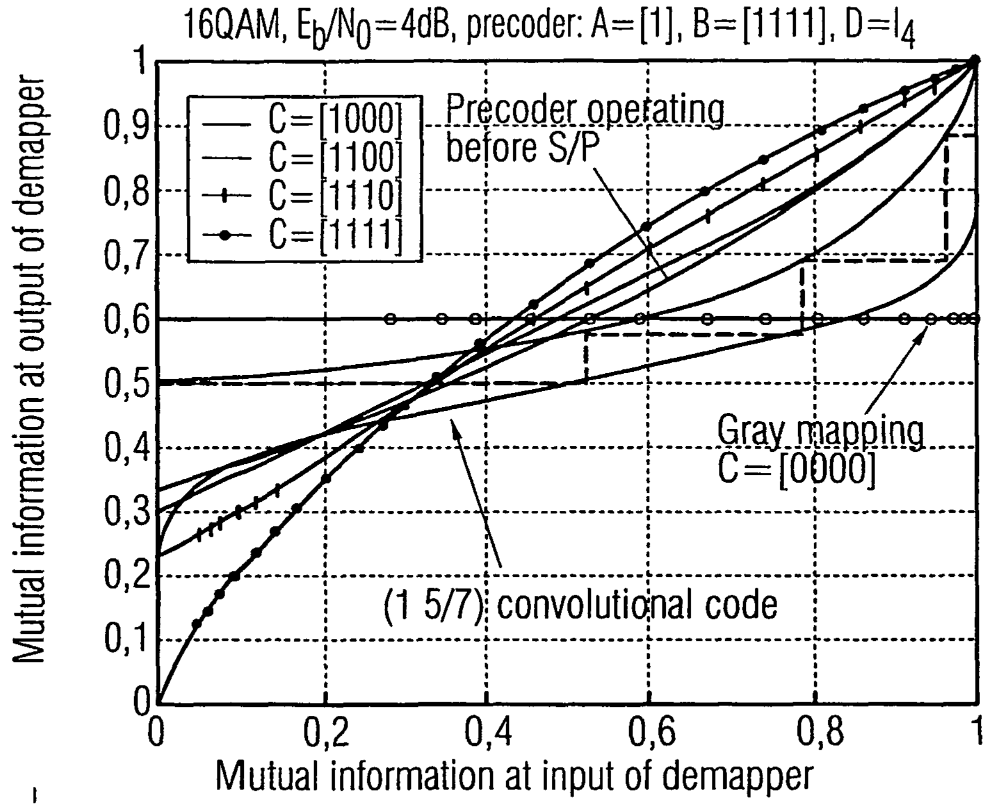
16QAM, $E_b/N_0$=4dB, precoder: A=[1], B=[1111], D=$I_4$
Mutual information at output of demapper
Mutual information at input of demapper
C=[1000]
C=[1100]
C=[1110]
C=[1111]
Precoder operating before S/P
Gray mapping C=[0000]
(1 5/7) convolutional code
0
0,1
0,2
0,3
0,4
0,5
0,6
0,7
0,8
0,9
1
0
0,2
0,4
0,6
0,8
1

FIG 14

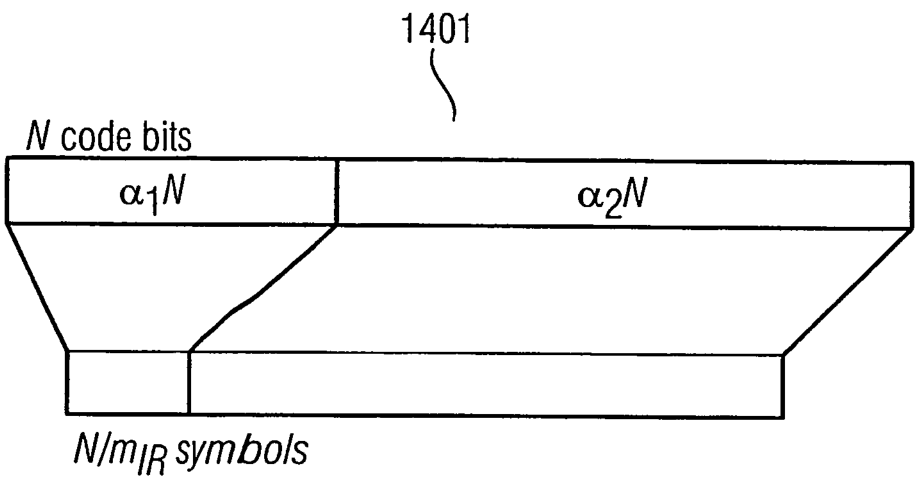

FIG 15

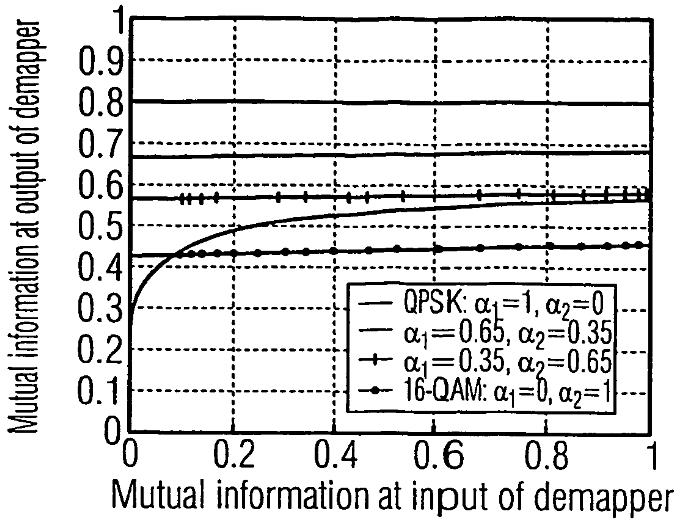


FIG 16

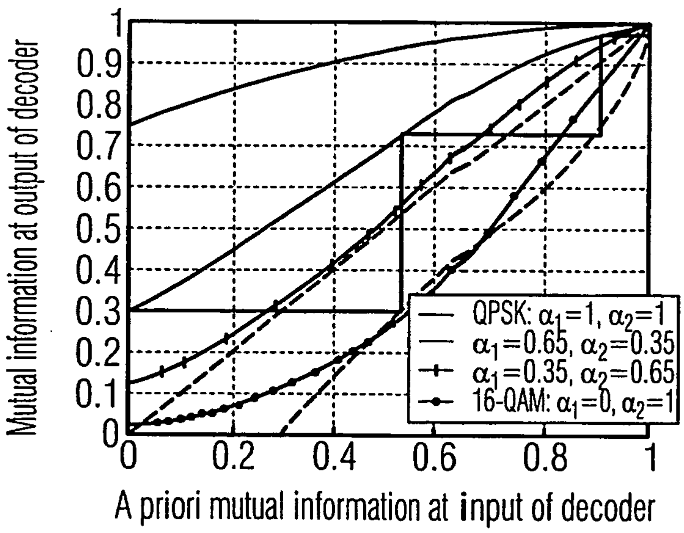


FIG 17

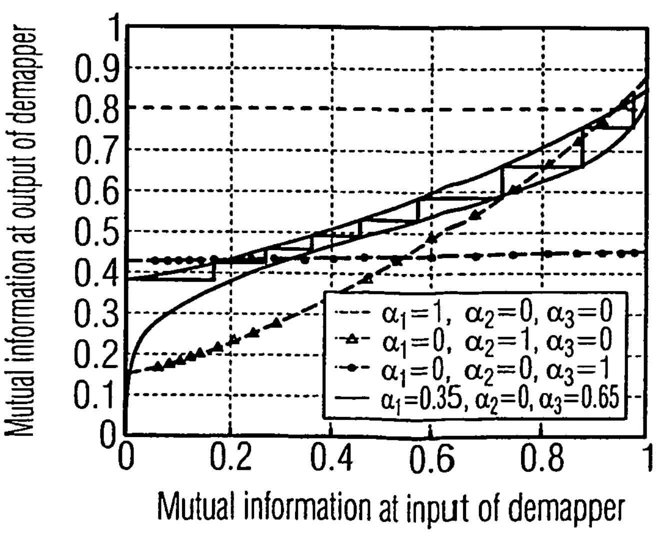

FIG 18

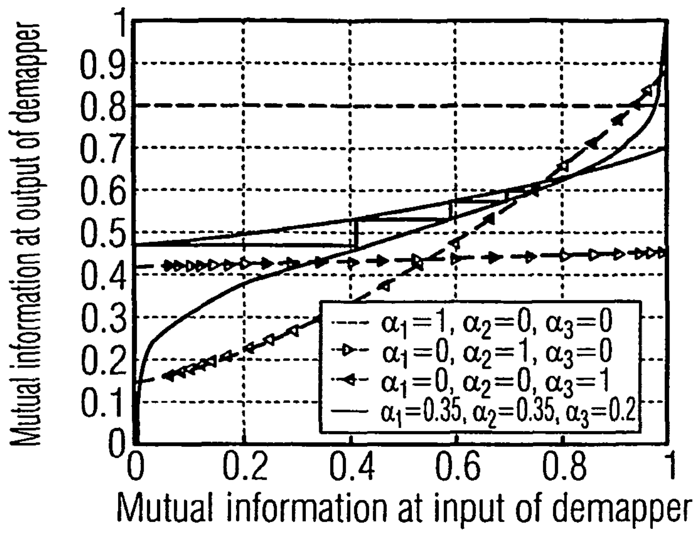


FIG 19

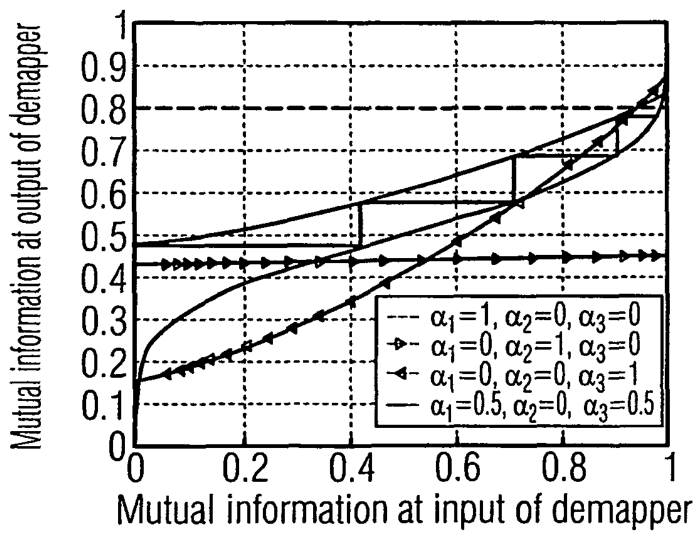


FIG 20

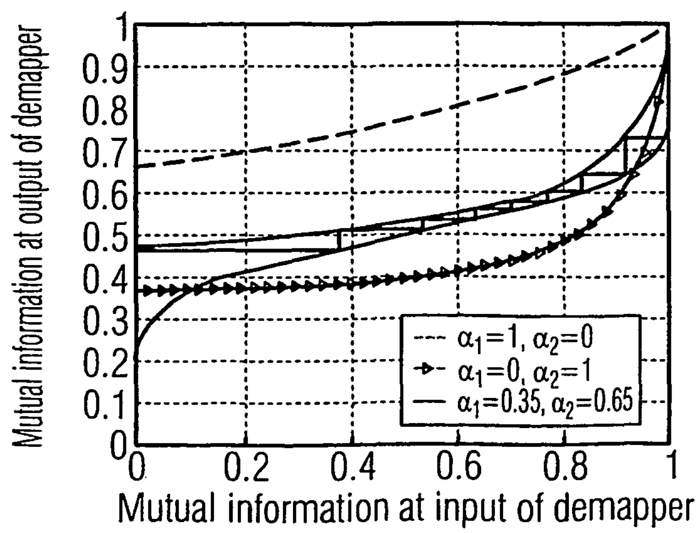

FIG 21

| MCS | Modulation | Code rate |
|---|---|---|
| 1 | GMSK | 0.53 |
| 2 | GMSK | 0.66 |
| 3 | GMSK | 0.8 |
| 4 | GMSK | 1 |
| 5 | 8-PSK | 0.37 |
| 6 | 8-PSK | 0.49 |
| 7 | 8-PSK | 0.76 |
| 8 | 8-PSK | 0.92 |
| 9 | 8-PSK | 1 |

Modulation and Coding Schemes (MCS) for EDGE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **M. LUBY ; M. MITZENMACHER ; A. SHOKROLLAHI ; D. SPIELMAN ; V. STEMANN.** Practical Loss-Resilient Codes. *Proc. 29th Annu. ACM Symp. Theory of Computing,* 1997, 150-159
- **B. FREY ; D. MACKAY.** Irregular turbo-like codes. *2nd Intern. Symposium on Turbo codes,* September 2000, 67-72
- **M. TÜCHLER ; J. HAGENAUER.** Exit charts of irregular codes. *Conference on Information Sciences and Systems (CISS),* March 2002
- **T. RICHARDSON ; R. URBANKE.** Design of low desity (sic) parity-check codes. *IEEE Transactions on Information Theory,* February 2001, vol. 47, 619-637
- **PINAR ÖRMECI et al.** Adapted Bit-Interleaved Coded Modulation. *IEEE Transactions on Communications,* September 2001, 1572-1581
- **DARIUSH DIVSALAR et al.** Iterative Turbo Decoder Analysis Based on Density Evolution. *IEEE Journal on Selected Areas in Communications,* May 2005, vol. 19 (5), 891-907
- **M. TÜCHLER ; J. HAGENAUER.** EXIT charts of irregular codes. *Proceedings of the Annual Princeton Conference on Information Sciences and Systems,* 20 March 2002, 748-753
- **A. GLAVIEUX ; S. LE GOFF ; C. BERROU.** Turbo-codes and high spectral efficiency modulation. *IEEE International Conference on Communications (ICC),* May 1994, 654-649
- **X. LI ; J. RITCEY.** Bit-interleaved coded modulation with iterative decoding using soft feedback. *Electronic Letters,* May 1998, vol. 34 (10), 942-943
- **J. SPEIDEL ; S. TEN BRINK ; R. YAN.** Iterative demapping and decoding for multilevel modulation. *Proc. IEEE Globecom Conference,* November 1998, 579-584
- **S. DOLINAR ; D. DIVSALAR ; F. POLLARA.** Serial concatenated modulation with rate-1 inner code. *Proc. IEEE Globecom Conference,* 777-782
- **M. TÜCHLER.** Design of serially concatenated systems for long or short block lengths. *IEEE International Conference on Communications (ICC)*
- **G. MONTORSI ; S. BENEDETTO ; D. DIVSALAR ; F. POLLARA.** Serial concatenation of interleaved codes: Performance analysis, design, and iterative decoding. *IEEE Transactions on Information Theory,* May 1998, vol. 44 (3), 906-926
- **S. TEN BRINK.** Convergence behavior of iteratively decoded parallel concatenated codes. *IEEE Transactions on Communications,* October 2001, vol. 49 (10), 1727-1737